# EUROPEAN PATENT APPLICATION

(11) **EP 2 157 725 A1**
(43) Date of publication of application: **24.02.2010**
(21) Application number: 09010404.3
(22) Date of filing: 12.08.2009
(51) Int. Cl.: H04L 9/08, H04L 9/32

(54) **Content protection apparatus, and content utilization apparatus**

(30) Priority: 22.08.2008 JP 2008213465
(71) Applicant: Hitachi Ltd., Chiyoda-ku Tokyo 100-8280 (JP)
(72) Inventor: Hatano, Yasuo, Tokyo 100-8220 (JP); Miyazaki, Kunihiko, Tokyo 100-8220 (JP)
(74) Representative: Strehl Schübel-Hopf & Partner

(57) **Abstract**

Content (120) is divided (401) into a of partial contents (500). Next, each of the partial contents (500) is encrypted (403) using a browsing-control-use secret key (508). Also, an editing-control-use secret key (506) and a partial-content validation key (507) are generated (402), then generating the feature value (505) for each of the partial content (500). Moreover, key-encrypted data (503) is generated (405) by encrypting the browsing-control-use secret key (508) and the editing-control-use secret key (506) corresponding to each of the browsable and editable partial contents, using the public key (511) of a user. Finally, encrypted content (121) is generated (407) from the key-encrypted data (503), encrypted partial contents (504), and the partial-content validation key (507).

## Description

### BACKGROUND

The present invention relates to a method for encrypting and decrypting digital content. More particularly, it relates to technologies which make it possible to control partial disclosure and editing of the digital content.

In recent years, the service which had been carried out on papers conventionally has become more and more computerized with the development of information communications appliances. In accompaniment with this trend, the procedures such as application and approval (i.e., service) which are conventionally carried out on papers, has also become more and more computerized with the use of networks. The digital content in such a procedure which is exchanged via the networks contains information whose disclosure should be limited depending on a user who browses the digital content such as personal information and trade secret.

Also, with respect to the addition of a comment, amendment of application information by the person in charge in the above-described computerized service, it is desirable to limit the editing location in a computerized document exchanged within the service, depending on a user who utilizes the digital content. Or, in the creation of documents such as project proposal, specification, proposal, and contract, it is desirable that each person in charge fills in only a necessary part.

Here, the terminology "content" refers to such information as sentence described in application, conference minutes, specification, and contract, program's source code and execution code, record of data such as voice and image, or information obtained by combining two or more of these. In particular, when these are represented as digital data, these are referred to as "digital content". Hereinafter, the digital content will be referred to as "content" simply.

The above-described limitation on the browsing location and editing location of content depending on a user who utilizes the content becomes necessary not only in the above-described example of the service, but also in a variety of concrete situations such as creation of co-used specification within a project, insertion of advertisement information and no disclosure of limited information in motion-picture delivery content, and input and browsing of medical-examination result in an electronic medical chart.

Conventionally, when controlling the browsing and editing of content depending on the role of a user, the following method has been employed: An unauthorized user is prohibited from browsing and editing the content by managing the content in a database in an integrated fashion, and controlling the user's access to the database.

Also, there has been known the following method: Only a user who possesses secret information is permitted to edit a specific location in the content by taking advantage of cryptographic technologies instead of the access control to database (Giuseppe Ateniese, Daniel H. Chou, Breno de Medeiros and Gene Tsudik, "Sanitizable Signature", Computer Security-ESORICS 2005, Lecture in Computer Science, Vol. 3679 (LNCS. 3679), pp. 159-177, 2005).

In the method disclosed in Giuseppe Ateniese et al., the content is divided into a plurality of partial contents. Next, the hash value for each partial content is calculated on each divided-block by taking advantage of a special hash function which is referred to as "Chameleon hash function". Moreover, a digital signature is generated for data obtained by coupling these hash values to each other.

General hash functions ("hash function" in the present patent specification refers to a hash function secure from the cryptographic standpoint, i.e., the hash function possessing the properties referred to as one-wayness and the collision resistance) possess a property which is referred to as "collision resistance". Consequently, it is difficult to find out a plurality of different inputs which output one and the same hash value. The Chameleon hash function, however, is a hash function which, only when the secret information is given, makes it possible to easily generate the different inputs (referred to as "second preimage") which possess one and the same hash value as the hash value for a certain input.

If a user who possesses no secret information has falsified a partial content in the content, the hash value for the partial content changes. As a result, the validation of the digital signature fails, and accordingly it is possible to detect the falsification of the content. In the case of a user who possesses the secret information, however, the property of the Chameleon hash function permits the user to edit each partial content without changing the hash value for each partial content. Consequently, it is possible for the user to partially edit the content because the validation of the digital signature succeeds. On account of this, distributing this secret information to each user in advance realizes controlling the editing location depending on each user.

Also, JP-A-2007-251921 has been known as a method for executing the disclosure control depending on each user by taking advantage of cryptographic technologies.

In JP-A-2007-251921, after the content has been divided into a plurality of partial contents, each partial content is encrypted using a secret key which is generated at random in the symmetric-key cryptography. Moreover, the secret key, which is generated when each partial content is encrypted, is encrypted using a public key in the asymmetric-key cryptography. The public key is specific to a user who is permitted to browse the content, or is possessed by authorized users in common. As a result, if the encrypted secret key is decrypted using a private key corresponding to the public key, the original secret key for decrypting each partial content becomes available. This processing realizes the controlling the browsing location of the content depending on each user.

### SUMMARY

As described earlier, as a conventional method for controlling the browsing location and editing location of content depending on a user who utilizes the content, the following method are known: An unauthorized user is prohibited from browsing and editing the content's information by managing the content in a database in an integrated fashion, and controlling the user's access to the database. In the method like this, however, the access control depending on each user becomes impossible once the content gets out of the management by the system. Accordingly, it becomes impossible to control the browsing location and editing location of the content depending on each user.

Also, Giuseppe Ateniese et al. describes the method for controlling the editing location of each partial content, but does not describe the case where a plurality of users edit one and the same area in the content. Moreover, Giuseppe Ateniese et al., does not describe the partial disclosure of content depending on each user.

JP-A-2007-251921 has been known as a method for realizing the browsing control. JP-A-2007-251921, however, does not describe the controlling the editing location in accordance with the authorization for each user. Also, it is a problem to be solved by the present invention that the information which should be managed in the encrypted content after being encrypted differs from JP-A-2007-251921. Because a partial content discussed in the present invention is required to have whichever states of (browsing-prohibited, editing-prohibited), (browsing-permitted, editing-prohibited), and (browsing-permitted, editing-permitted) as the access-control information with respect to each user (or, user possessing a certain authorization).

The present invention provides, by taking advantage of cryptographic technologies, a technology for controlling an editing location in the content depending on each user who utilizes the content, and for allowing a plurality of users to edit one and the same area in the content.

Furthermore, the present invention provides a technology for controlling not only the editing location but also a browsing location in accordance with the authorization for each user. Namely, the present invention provides a technology for controlling both the browsable location and the editable location in the content in accordance with the authorization for each user.

A more concrete aspect of the disclosed system is a content protection apparatus, wherein the apparatus:
divides content into a plurality of partial contents and generates a browsing-control-use secret key (which is the secret key in the symmetric-key cryptography), an editing-control-use secret key (which is a signing key and a validation key in the digital signature technology) and a partial-content validation key for each of the partial-contents;
further, encrypts the partial contents using the browsing-control-use secret key generated to generate encrypted partial contents, and generates feature values for the partial contents by calculating digital-signature values for the partial contents using the editing-control-use secret key;
further, encrypts the browsing-control-use secret key and the editing-control-use secret key, using a public key in the asymmetric-key cryptography which is assigned to authorization based on access-control information corresponding to the authorization corresponding to the public key, to generate key-encrypted data;
further, generates a signing key and a validation key in the digital signature technology for the content as a whole, generates an integrity-guarantee-use digital signature from the signing key, and then generates encrypted content from the key-encrypted data, the access-control information, the encrypted partial contents, the feature values for the partial contents, and the integrity-guarantee-use digital signature.

Moreover, in the case of browsing the content, a content utilization apparatus for utilizing the encrypted content generated based on the disclosed system decrypts the key-encrypted data using a private key corresponding to the public key in the asymmetric-key cryptography. Then, the encrypted partial contents are decrypted using the browsing-control-use secret key obtained as a result of the decryption of the key-encrypted data.

Furthermore, in the disclosed system, in the case of editing the partial contents, feature values for after-editing partial contents are generated by calculating digital-signature values of the after-editing partial contents, using the editing-control-use secret key obtained as a result of the decryption of the key-encrypted data. Then, after-editing encrypted partial contents are generated from the after-editing partial contents, using the browsing-control-use secret key. In addition, the original encrypted partial contents and the after-editing encrypted partial contents are exchanged with each other, and the original feature values for the partial contents and the feature values for the after-editing partial contents are exchanged with each other.

Moreover, according to another aspect, the feature values for the partial contents are elements of a finite group, and the content protection apparatus includes a unit for calculating an aggregate feature value by multiplying the feature values for the partial contents by each other. In the case of editing the partial contents, after-editing encrypted partial contents are generated from after-editing partial contents, using the browsing-control-use secret key. Then, feature values for the after-editing partial contents are generated using the editing-control-use secret key obtained as a result of the decryption of the key-encrypted data. Furthermore, an aggregate after-editing feature value is generated by multiplying the aggregate feature value by inverse elements of the feature values for the partial contents and further by the feature values for the after-editing partial contents. In addition, the encrypted partial contents and the after-editing encrypted partial contents are exchanged with each other, and the aggregate feature value and the aggregate after-editing feature value are exchanged with each other.

In still another aspect of the disclosed system, content is divided into a plurality of partial contents. Next, a browsing-control-use secret key (which is the secret key in the symmetric-key cryptography), an editing-control-use secret key and a partial-content validation key, which are a pair of the private key and the public key of a Chameleon hash function, are generated for each partial-content. Moreover, encrypted partial contents are generated by encrypting the partial contents using the browsing-control-use secret key generated, and random numbers are generated for the partial contents. Feature values for the partial contents are generated by calculating hash values based on the Chameleon hash function for the partial contents using the random numbers generated and the editing-control-use secret key. Furthermore, key-encrypted data is generated by encrypting the browsing-control-use secret key and the editing-control-use secret key, using a public key in the asymmetric-key cryptography which is assigned to authorization, based on access-control information corresponding to the authorization corresponding to the public key. In addition, a signing key and a validation key in the digital signature technology are generated for the content as a whole. Then, an integrity-guarantee-use digital signature is generated from the signing key, and encrypted content is generated from the key-encrypted data, the access-control information, the encrypted partial contents, the random numbers, the feature values for the partial contents, and the integrity-guarantee-use digital signature.

Furthermore, in the above-described aspect, in the case of editing the partial contents, after-editing random numbers are generated taking advantage of an update processing of the Chameleon hash function from the editing-control-use secret key which are obtained as a result of decrypting the key-encrypted data using a private key corresponding to the public key in the asymmetric-key cryptography, the partial contents, the random numbers, and after-editing partial contents. Then, after-editing encrypted partial contents are generated from the after-editing partial contents, using the browsing-control-use secret key. In addition, the encrypted partial contents and the after-editing encrypted partial contents are exchanged with each other, and the random numbers and the after-editing random numbers are exchanged with each other.

In the above-described digital-content protection apparatus, the feature value for each partial content of the digital content is generated using the editing-control-use secret key.

Moreover, based on the access-control information, the editing-control-use secret key is encrypted using the public key in the asymmetric-key cryptography which is assigned to each authorization.

The presence or absence of the falsification of each partial content is detectable using the feature value and the partial-content validation key corresponding to the editing-control-use secret key for the partial content. Unless a user possesses the knowledge of the editing-control-use secret key, it is difficult for the user to generate a feature value which results in a success in validating the digital signature. If, however, the user possesses the knowledge of the editing-control-use secret key, it is easy for the user to calculate the feature value which results in the success.

The editing-control-use secret key is encrypted in accordance with the access-control information, using the public key to which the editing authorization for each partial content is given. As a result, when the key-encrypted data within the encrypted content is decrypted using a private key corresponding to the public key to which the editing authorization is given, the editing-control-use secret key for each partial content is contained in the decryption result. Meanwhile, if the key-encrypted data is decrypted using a corresponding private key to which no editing authorization is given, it becomes difficult to acquire the editing-control-use secret key. On account of this, if each partial content (such as a case where a partial content is replaced illegally) has been falsified illegally, the falsification is detectable. Accordingly, it becomes possible to control whether each of the partial contents is editing-permitted or not.

Also, in one aspect of the disclosed system, the partial contents are encrypted using the browsing-control-use secret key. Similarly to the editing-control-use secret key, based on the access-control information, the browsing-control-use secret key is also encrypted, using the public key to which the browsing authorization for each partial content is given. Unless a user possesses the knowledge of the browsing-control-use secret key, it is difficult for the user to decrypt the partial contents encrypted (i.e., encrypted partial contents). As a result, when the key-encrypted data in the encrypted content is decrypted using a private key to which the browsing authorization is given, the browsing-control-use secret key for each partial content is contained in the decryption result. In other cases, the browsing-control-use secret key is not contained therein. The above-described processing makes it possible to control whether each of the partial contents is browsing-permitted or not.

The private keys in accordance with the authorizations are distributed in advance to each user who utilizes the content. This key-distribution makes it possible to control whether or not an arbitrary location in the content is browsing-permitted and editing-permitted depending on each user who utilizes the content.

According to the teaching herein, it becomes possible to control whether or not an arbitrary location in the content is browsing-permitted and editing-permitted depending on each user who utilizes the content.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 illustrates an overview of the network configuration in the first embodiment;
Fig. 2 illustrates an overview of the configuration of the content protection apparatus in the first embodiment;
Fig. 3 illustrates an outline of the data flow in the first embodiment;
Fig. 4 illustrates an outline of the encryption processing in the first embodiment;
Fig. 5 schematically illustrates the encryption processing in the first embodiment;
Fig. 6 schematically illustrates the processing of the partial contents in the encryption processing in the first embodiment;
Fig. 7 illustrates an outline of the decryption processing in the first embodiment;
Fig. 8A illustrates an outline of the update processing of the encrypted content in the first embodiment;
Fig. 8B illustrates an outline of the update processing of the encrypted content in the second embodiment;
Fig. 8C illustrates an outline of the update processing of the encrypted content in the third embodiment;
Fig. 9 illustrates an overview of the configuration of the encrypted content in the first embodiment;
Fig. 10 illustrates the configuration example of the encrypted content in the first embodiment;
Fig. 11 illustrates an outline of the processing from the decryption of the encrypted content to the representation of the decrypted content in the first embodiment; and
Fig. 12 illustrates one example of the key management method in the first embodiment.

### DETAILED DESCRIPTION OF THE EMBODIMENTS

### [Embodiment 1]

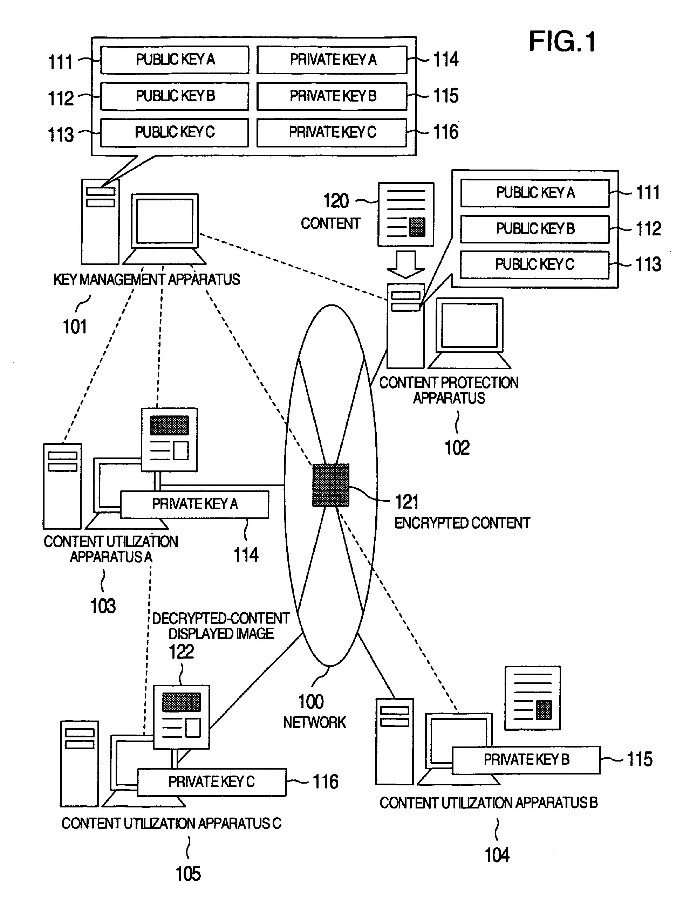

Fig. 1 illustrates the distribution of content in a first embodiment. As illustrated in Fig. 1, in the present system, a content protection apparatus 102 for encrypting content 120, and a content utilization apparatus A 103, a content utilization apparatus B 104, and a content utilization apparatus C 105 for receiving encrypted content 121 transmit/receive the encrypted content 121 via a network 100. Incidentally, although, in the drawing, the encrypted content 121 is transmitted/received via the network 100, this scheme may be modified. For example, the encrypted content 121 may be recorded in an external storage medium such as USB memory, and be supplied off-line to the content utilization apparatuses. Also, although, the drawing illustrates the three units of content utilization apparatuses, i.e., the content utilization apparatus A 103, the content utilization apparatus B 104, and the content utilization apparatus C 105, the content utilization apparatuses are not always required to be three. Moreover, in the drawing, the content protection apparatus 102 stores therein a public key A 111, a public key B 112, and a public key C 113. Also, the content utilization apparatus A 103, the content utilization apparatus B 104, and the content utilization apparatus C 105 store therein a private key A 114, a private key B 115, and a private key C 116, respectively. This scheme, however, does not necessarily have to be as above. Namely, the content protection apparatus 102 may store therein the three or more (or less) public keys. Incidentally, the public keys and the private keys are the public keys and the private keys in the asymmetric-key cryptography. Also, from the point-of-view of security, it is desirable to store the private keys in a tamper-resistant-property-having storage medium such as an IC card, and to perform the decryption processing by supplying the IC card to a reader equipped with a decryption apparatus at the time of decryption.

Hereinafter, when there is no necessity for making the distinction among the content utilization apparatus A 103, the content utilization apparatus B 104, and the content utilization apparatus C 105, the private key A 114, the private key B 115, and the private key C 116, and the public key A 111, the public key B 112, and the public key C 113, these will be referred to as "content utilization apparatuses, private keys, and public keys" simply. Additionally, the content utilization apparatus and the content protection apparatus need not necessarily be the different apparatuses, and thus may also be the same apparatus.

A key management apparatus 101 establishes the correspondence among authorizations, the private keys, and the public keys. Furthermore, the key management apparatus 101 performs the distribution of a private key to each user in accordance with the authorization, and the publication and distribution of a public key to the content protection apparatus 102. Incidentally, it is preferable to perform the publication of a public key to the content protection apparatus 102 as follows:

For example, taking advantage of a Web server, information on each user or group and information on a public key corresponding thereto are made accessible from the content protection apparatus 102; and

At the time of encryption, or prior thereto, the content protection apparatus 102 is permitted to obtain the public key necessary for the encryption from the above-described Web server.

Also, at this time, it is desirable to issue a public key certificate for the public key obtained from the Web server in order to confirm that the public key is the one which is managed in the key management apparatus 101.

Additionally, as described earlier, it is desirable from the point-of-view of security to store the private keys in a tamper-resistant-property-having storage medium such as an IC card. Also, as described above, when performing the publication of a public key by taking advantage of the Web server, it is desirable to prevent the private key from being directly browsed from the network 100 by implementing the Web server and the key management apparatus 101 separately, or the like.

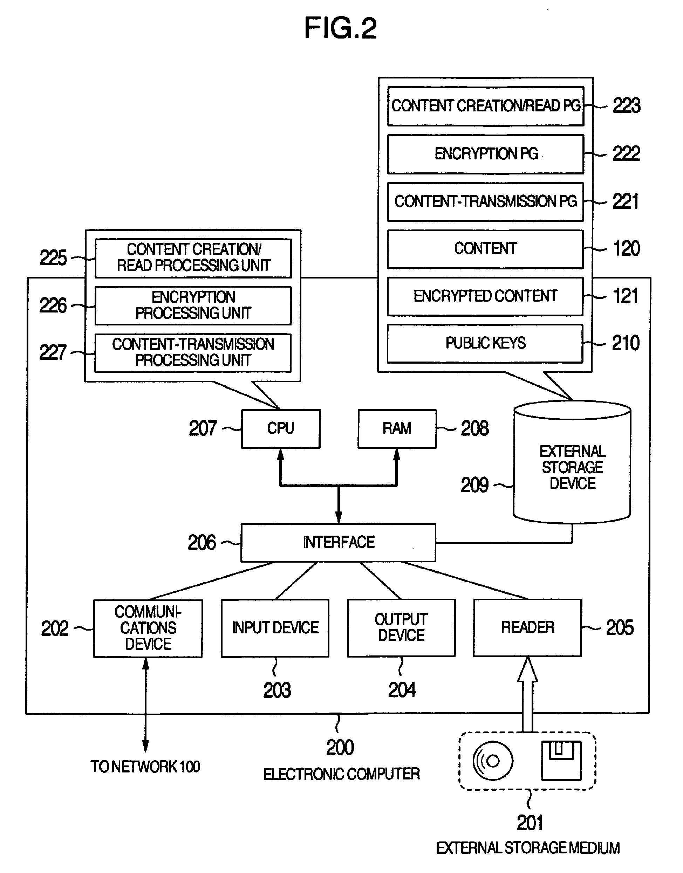

Fig. 2 illustrates an overview of the configuration of the content protection apparatus 102. The encryption apparatus 102 is an electronic computer 200 which has a general configuration including a CPU 207, a RAM 208 which functions as the work area for the CPU 207, an external storage device 209 such as HD, a reader 205 for fetching data from an insertable/removable external storage medium 201 such as FD or CD-ROM which is available to the electronic computer 200, an output device 204 such as display, an input device 203 such as mouse and keyboard, a communications device 207 for performing communications with another apparatus via the network, and an interface 206 responsible for data communications among the above-described configuration components.

Also, the external storage device 209 of the content protection apparatus 102 stores therein a content creation/read program 223 (hereinafter, program will be referred to as merely "PG"), an encryption PG 222, and a content-transmission PG 221. The CPU 207 executes these programs, thereby embodying, on the apparatus, processing units: a content creation/read processing unit 225; an encryption processing unit 226; and a content-transmission processing unit 227 respectively. Also, the external storage device 209 of the content protection apparatus 102 stores therein the content 120 to be an encryption target, the encrypted content 121 which is obtained as a result of the encryption, and the public keys 210 which are used at the time of encryption. Additionally, the one or more public keys 210 are stored in the external storage device 209 as necessary.

Each content utilization apparatus also has a configuration which is similar to the configuration of the content protection apparatus 102. The external storage device 209 of each content utilization apparatus, however, stores therein encrypted content 121, the private keys, a content-reception PG, the content-transmission PG, a decryption PG, and a decrypted-content display PG. Incidentally, similarly to the content protection apparatus 102, the CPU 207 executes the content-reception PG, the content-transmission PG, the decryption PG, and the decrypted-content display PG, thereby embodying, on the apparatus, a content-reception processing unit, the content-transmission processing unit, a decryption processing unit, and a decrypted-content display processing unit.

Each content utilization apparatus also has the configuration which is similar to the configuration of the content protection apparatus 102. The external storage device 209 of each content utilization apparatus, however, stores therein the content-reception PG, the encrypted content 121, the content-transmission PG, the decryption PG, an editing PG, and the private keys. The CPU executes the content-transmission PG, the content-reception PG, the decryption PG, and the editing PG, thereby embodying, on the apparatus, the content-transmission processing unit, the content-reception processing unit, the decryption processing unit, and an editing processing unit.

Additionally, as described earlier, it is desirable from the reason for security to store the private keys in a tamper-resistant-property-having storage device such as an IC card. When the private keys are stored in the tamper-resistant-property-having storage device such as the IC card, the private keys in the external storage device 209 of each content utilization apparatus are unnecessary. Instead, an IC-card processing PG is stored in the external storage device 209 of each content utilization apparatus. The private keys are supplied using a device such as the IC card and via the reader 205 or the like.

The key management apparatus 101 also has the configuration which is similar to the configuration of the content protection apparatus 102. The external storage device 209 of the key management apparatus 101, however, stores therein a key management PG, a public-key/private-key generation PG, a public-key distribution PG, a private-key distribution PG, the public keys, and the private keys. Incidentally, similarly to the content protection apparatus 102, the CPU 207 executes the key management PG, the public-key/private-key generation PG, the public-key distribution PG, and the private-key distribution PG, thereby embodying, on the apparatus, a key-management processing unit, a public-key/private-key generation processing unit, a public-key distribution processing unit, and a private-key distribution processing unit.

These programs may also be stored in advance in the RAM 208 or the external storage device 209 of the electronic computer 200. Alternatively, when required, the programs may also be introduced from the above-described external storage medium 201, or from another device via a communications medium (the network 100, or carrier wave or digital signal propagating on the network 100). Also, in some cases, "program" will be referred to as "code" or "module".

Additionally, in some cases, for convenience of explanation, the operation explanation of each processing unit embodied by the execution of each PG will be given such that each PG is regarded as the subject of the processing.

Incidentally, in the key management apparatus 101, the private keys need not necessarily be stored in the external storage device 209 of the key management apparatus 101. For example, it is desirable from the point-of-view of security that the private keys may also be generated in a tamper-resistant-property-having device. Because the key management apparatus 101 may manage the reference to the private keys generated, which makes it difficult even for the manager of the key management apparatus 101 to manipulate the private keys directly.

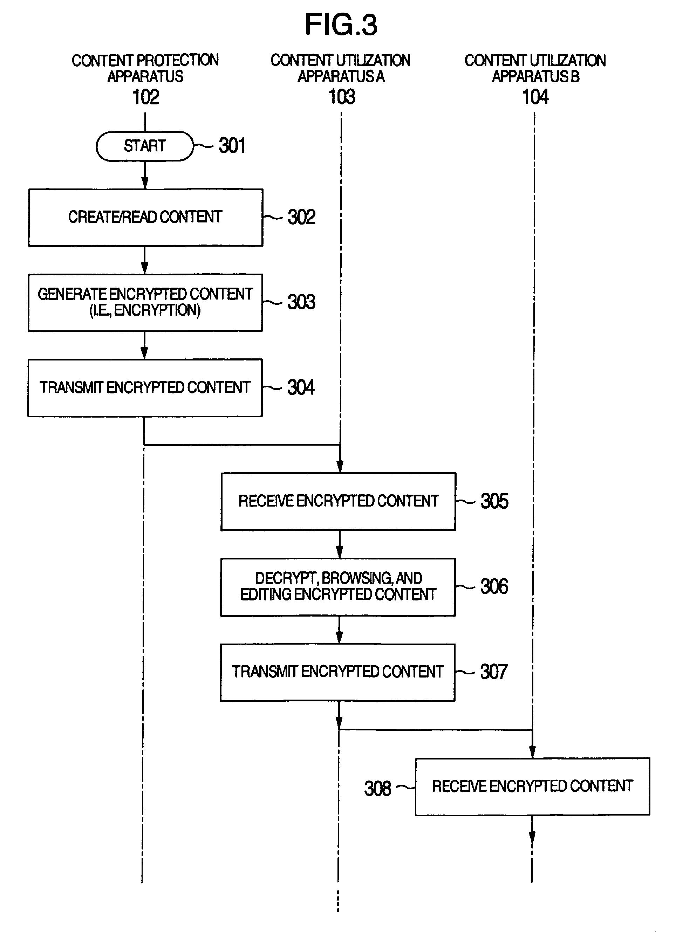

Fig. 3 illustrates an overview of the data flow of the content 120 in the present embodiment. Incidentally, in the drawing, the explanation is given using the content utilization apparatus A 103 and the content utilization apparatus B 104. However, the content utilization apparatuses for transmitting/receiving the encrypted content 121 with the content protection apparatus 102 or another content utilization apparatus are not limited to the above-described apparatuses A 103 and B 104.
301: START
302: The creation/read processing unit 225 of the content protection apparatus 102 performs the creation or read of the content 120.
303: The encryption processing unit 226 of the content protection apparatus 102 encrypts the content 120, thereby generating the encrypted content 121.
304: The content-transmission processing unit 227 of the content protection apparatus 102 transmits the encrypted content 121 to the content utilization apparatus A 103.
305: The content-reception processing unit of the content utilization apparatus A 103 receives the encrypted content 121.
306: The decryption processing unit of the content utilization apparatus A 103 decrypts the encrypted content 121, thereby generating a decrypted-content displayed image 122 and then outputting it using the output device 204. Moreover, the editing processing unit of the content utilization apparatus A 103 updates the encrypted content 121.
307: The content-transmission processing unit of the content utilization apparatus A 103 transmits the encrypted content 121 to the content utilization apparatus B 104.
308: The content-reception processing unit of the content utilization apparatus B 104 receives the encrypted content 121.

In the decryption of the encrypted content 121 by the decryption processing unit at the step 306 in Fig. 3, in order to strictly prevent information on a disclosed part of the content decrypted (which, hereinafter, will be referred to as "the decrypted content") from leaking out of the decrypted content and the decrypted-content displayed image 122, the following is desirable:
The decrypted content is not stored in the external storage device 209 of the content utilization apparatus;
Even if the decrypted content is stored therein, the decrypted content is deleted immediately after the browsing and editing are terminated; or

Copying (i.e., contents extraction) or printing processing of a decrypted area is prohibited from the displayed image. Depending on an application, however, the copying, printing, or saving (i.e., the storage of the decrypted content in the external storage device 209) becomes necessary, and thus these are not prohibited in the present embodiment.

Incidentally, at the step 307 in Fig. 3, the content-transmission processing unit of the content utilization apparatus A 103 transmits the encrypted content 121 to another content utilization apparatus B 104. This scheme, however, may be modified. For example, the content-transmission processing unit may also transmit the encrypted content 121 to a plurality of content utilization apparatuses simultaneously. Alternatively, instead of transmitting the encrypted content 121 using the content-transmission processing unit, the encrypted content 121 may also be stored in the external storage medium 201, and then be sent to the content utilization apparatus B 104. Also, if, at the step 307, there is no necessity for transmitting the encrypted content 121 to the other content utilization apparatus, the encrypted content 121 or the decrypted content may be saved within the external storage device 209 of the content utilization apparatus A 103 and then terminate the processing, the encrypted content 121 may be transmitted to a content-saving-use database server and delete it, or the like.

Incidentally, at the step 306 in Fig. 3, the content utilization apparatus A 103 may not edit the decrypted content (i.e., update the encrypted content 121). Namely, the processing by the content utilization apparatus A 103 at the step 306 may browse the content alone.

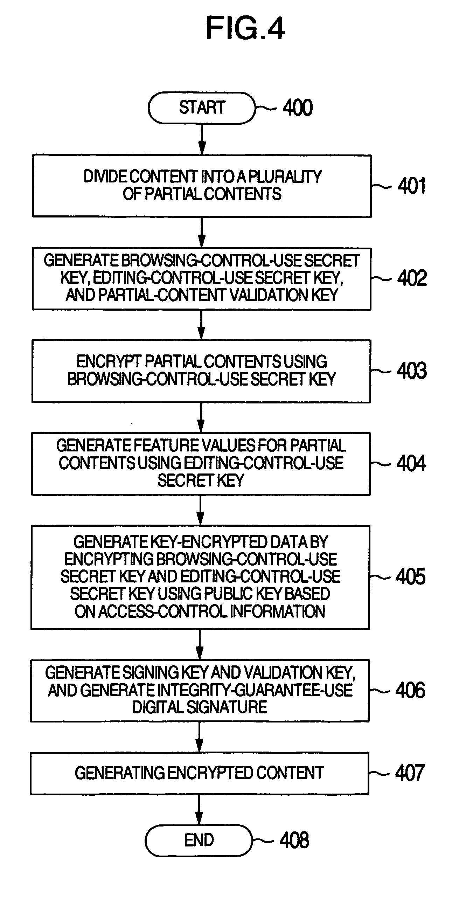

Fig. 4 illustrates an overview of steps for the generation of the encrypted content 121 performed by the encryption processing unit 226 of the content protection apparatus 102. Additionally, the content 120, the one or more public keys to be used for the encryption, content division information, and access-control information is input into the encryption processing unit 226.

Here, the content division information is information for dividing the content 120 into one or more partial contents m[1], ... , m[n]. The content division information may be represented using the byte-unit representation such that the content 120 is divided from the A-th bytes to the B-th bytes from the front head, from the B-th bytes to the C-th bytes therefrom, .... Alternatively, the content division information may be represented using representation such as the A-row/B-column in the case of table data, the coordinate-information in the case of image data, the Xpath expression in the case of XML data. Incidentally, the content 120 need not necessarily be a single file, and thus may also be so configured as to include a plurality of files. In this case, the content division includes a processing of dividing the content 120 in the file unit such as a file 1, a file 2, ..., or a processing of dividing the content 120 in the file folder unit such as all the files within a folder A which a certain number of files has been put together into the folder unit in advance.

Hereinafter, to simplify the explanation, the access-control information will be represented as AC = (ac[1], ..., ac[u]), and the public keys to be used for the encryption will be represented as pk[1], ..., pk[u]. Incidentally, the access-control information is information for indicating in which state of (browsing-prohibited, editing-prohibited), (browsing-permitted, editing-prohibited), and (browsing-permitted, editing-permitted) for each of encrypted partial contents c[i] when the result is obtained by decrypting the encrypted content 121 using a private key sk[j] corresponding to the public key pk[j]. It is preferable to implement the above-described information using the arrangement or the like on the programs.
400: START
401: The encryption processing unit 226 divides the content into a plurality of partial contents.
402: The unit 226 generates a browsing-control-use secret key, an editing-control-use secret key, and a partial-content validation key.
403: The unit 226 encrypts the partial contents, using the browsing-control-use secret key.
404: The unit 226 generates feature values for the partial contents, using the editing-control-use secret key.
405: The unit 226 generates key-encrypted data by encrypting the browsing-control-use secret key and the editing-control-use secret key using the public key based on the access-control information.
406: The unit 226 generates a signing key and a validation key, and generates an integrity-guarantee-use digital signature.
407: The unit 226 generates encrypted content.
408: END

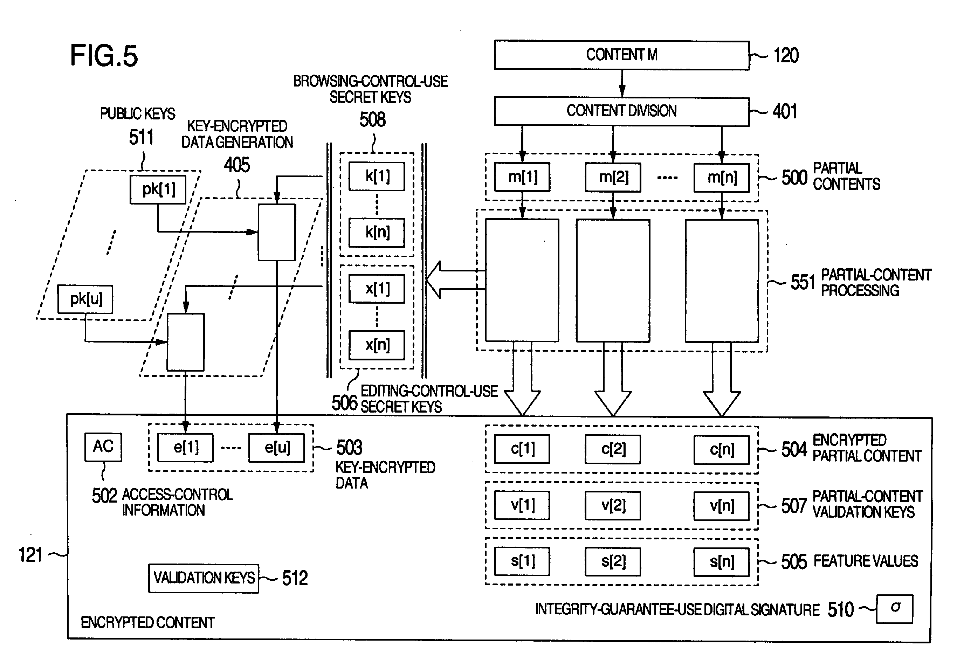

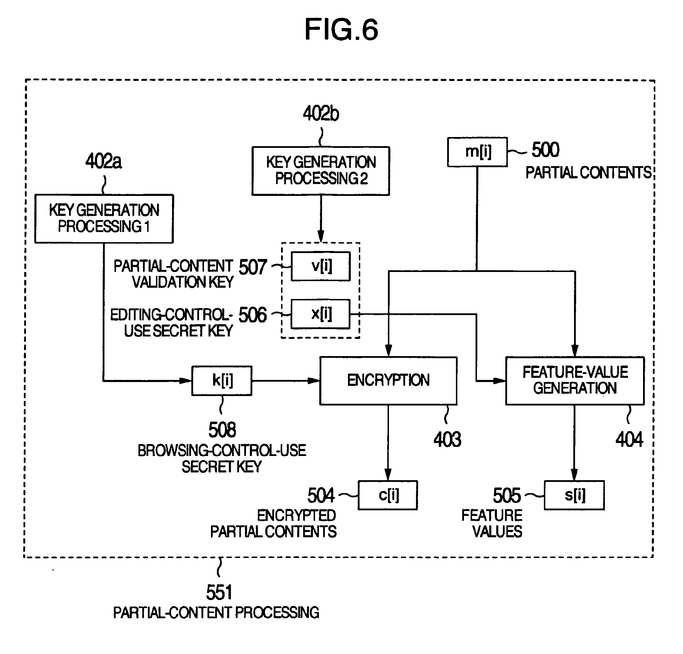

Fig. 5 and Fig. 6 illustrate the above-described processing schematically. Referring to Fig. 4, Fig. 5, and Fig. 6, the details of the above-described respective steps will be explained below.

First, at the step 401, based on the above-described content division information, the encryption processing unit 226 divides the content 120 into the one or more partial contents m[1], ... , m[n]. The partial contents m[i] divided are then input into a partial-content processing 551 (Fig. 5). As the first processing of the partial-content processing 551 at the step 402, the unit 226 generates the browsing-control-use secret key k[i] 508, the editing-control-use secret key x[i] 506, and the partial-content validation key v[i] 507 (each of which corresponds to a key generation processing 1 402a and a key generation processing 2 402b in Fig. 6). Next, the unit 226 encrypts the partial contents m[i] 500, using the browsing-control-use secret key k[i] 508 (step 403). Moreover, the unit 226 generates the feature values s[i] 505 for the partial contents m[i] 500, using the editing-control-use secret key x[i] 506 (step 404).

Here, the browsing-control-use secret key k[i] 508 is the secret key in the symmetric-key cryptography. The editing-control-use secret key x[i] 506 and the partial-content validation key v[i] 507 are a signing key and the corresponding validation key in the digital signature technology, respectively. Also, the encryption at the step 403 is the encryption processing in the symmetric-key cryptography. The generation of the feature values s[i] 505 at the step 404 is the generation processing for the digital signature in the digital signature technology.

The encryption processing unit 226 performs the above-described steps 402, 403, and 404 for all of the partial contents m[i], then performing the processing at the next step 405. At the step 405, based on the access-control information AC input into the unit 226, the unit 226 encrypts the browsing-control-use secret key k[i] 508 and the editing-control-use secret key x[i] 506 using the public key pk[i] 511 as described below.

First, the unit 226 makes reference to the access-control information ac[i] = (w[1], ..., w[n]). Then, if w[i] is found to be (browsing-permitted, editing-permitted), the unit 226 acquires the browsing-control-use secret key k[i] 508 and the editing-control-use secret key x[i] 506. Meanwhile, if w[i] is found to be (browsing-permitted, editing-prohibited), the unit 226 acquires the browsing-control-use secret key k[i] 508, but does not acquire the editing-control-use secret key x[i] 506 (Here, if w[i] is found to be (browsing-prohibited, editing-prohibited), the unit 226 acquires nothing). Next, the unit 226 performs the above-described processing with respect to all of w[i]. Moreover, the unit 226 couples, to each other, the resultant browsing-control-use private key k[i] 508 and editing-control-use secret keys x[i] 506 obtained. Furthermore, using the public key pk[i] 511, the unit 226 encrypts the coupled data.

The unit 226 performs the above-described processing with respect to all of the public keys pk[i] 511, thereby generating the key-encrypted data e[1], ..., e[u].

Next, at the step 406, the unit 226 generates a pair of the signing key and the validation key 512 in the digital signature technology. Moreover, the unit 226 couples, to each other, the partial-content validation key v[i] 507 generated at the step 402b, the access-control information ac[i] 502, the key-encrypted data e[1], ..., e[u] 503, and the validation key generated at the present step. Furthermore, using the signing key generated at the present step, the unit 226 generates the integrity-guarantee-use digital signature σ 510 with respect to the coupled data.

Finally, at the step 407, the unit 226 generates the encrypted content by coupling, to each other, the access-control information AC 502, the key-encrypted data e[1], ..., e[u] 503, encrypted partial contents c[1], ..., c[n] 504, the partial-content validation key v[1], ..., v[n] 507, the feature values s[1], ..., s[n] 505, the digital signature σ 510, and the validation key 512.

In the above-described processing, the signing key and the validation key 512 are generated at the step 406. The signing key and the validation key 512, however, need not necessarily be generated at the step 406. For example, the key management apparatus 101 may also generate the signing key and the validation key 512 for giving the signature to the content 120, and utilize the keys for the generation of the integrity-guarantee-use digital signature σ 510 by storing the keys in the content protection apparatus. In this case, in addition to the public keys and the private keys, a pair of signing-key and validation-key generation PG for generating the signing key and the validation key 512 as well as the signing key and validation key generated are stored in the external storage device 209 of the key management apparatus 101. Additionally, similarly to the private keys, the signing key need not necessarily be generated and stored of the key management apparatus 101.

Moreover, the above-described signing key and validation key 512 may also be a signing key and a validation key 512 which are generated in a component other than the key management apparatus 101. In this case, with respect to the validation key 512, it is desirable that the public key certificate has been issued, so that the owner of the signing key becomes apparent, or so that the user who had encrypted the content can be identified using the validation key 512 at the time of the validation. Also, in this case, it becomes difficult to falsify the validation key 512. As a result, the validation key 512 itself need not be included in the encrypted content 121.

Also, at the step 402, the partial-content validation key v[i] 507 and the editing-control-use secret key x[i] 506 are supposed to be generated separately for each partial content m[i] 500. If, however, a digital signature algorithm (such as DSA) which possesses a commonly-usable parameter is used, it is allowable when starting the processing at the step 402 to first generate one commonly-usable parameter and then take advantage of the parameter as part of the partial-content validation key v[i] 507 and the editing-control-use secret key x[i] 506 for the individual partial contents m[i] 500.

Additionally, in the present embodiment, the explanation has been given concerning the case of controlling both the editing location and the browsing location in the content 120. The browsing location, however, need not necessarily be controlled. In this case, the generation of the browsing-control-use secret key at the step 402, and the encryption of the partial contents at the step 403 are unnecessary. Also, either of two states of being editing-permitted and editing-prohibited is stored in the access-control information ac[i]. Then, if w[j] is found to be editing-permitted, the editing-control-use secret key x[i] 506 is obtained. Meanwhile, if w[j] is found to be editing-prohibited, nothing is obtained. Moreover, coupled data is encrypted using the public key pk[i] 511. Here, the coupled data is obtained by coupling, to each other, the editing-control-use secret keys x[i] 506 obtained for the access-control information ac[i].

Furthermore, in the above-described encryption processing, the feature values s[i] 505 is generated for the partial contents m[i] 500. The feature values s[i] 505, however, may also be generated for the encrypted partial contents c[i] 504.

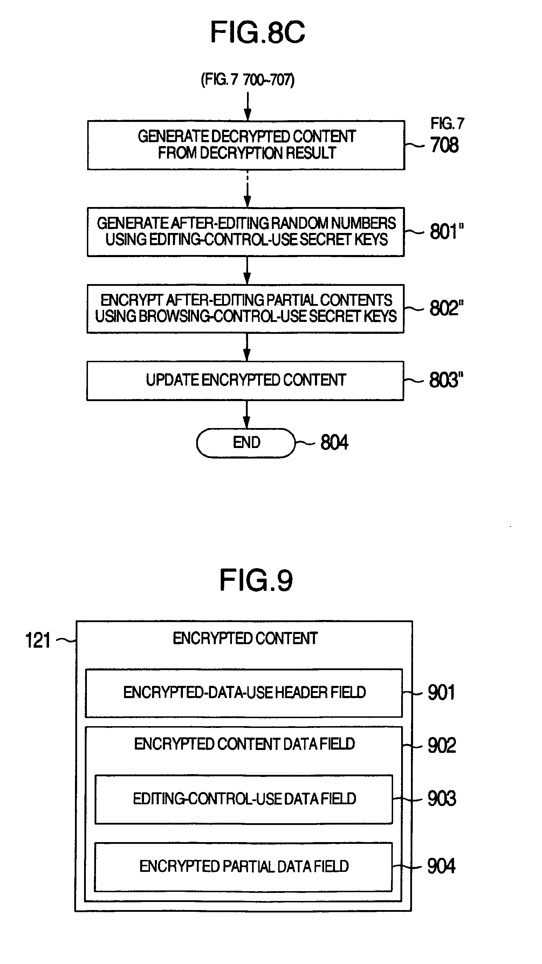

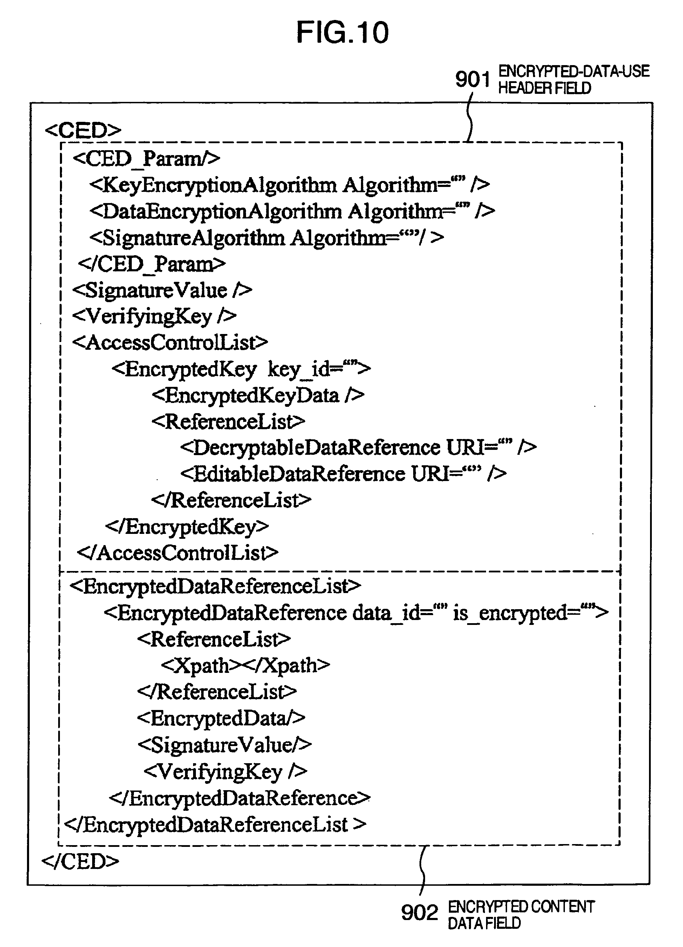

Referring to Fig. 9 and Fig. 10, the structure of the encrypted content 121 obtained as the output of the encryption processing unit 226 will be explained later.

Incidentally, in the above-described encryption processing, when the update processing for the encrypted content 121 (which will be described later) is performed, specific identifiers may also be assigned on each content basis prior to the encryption processing in order to indicate from which encrypted content 121 the content has been derived.

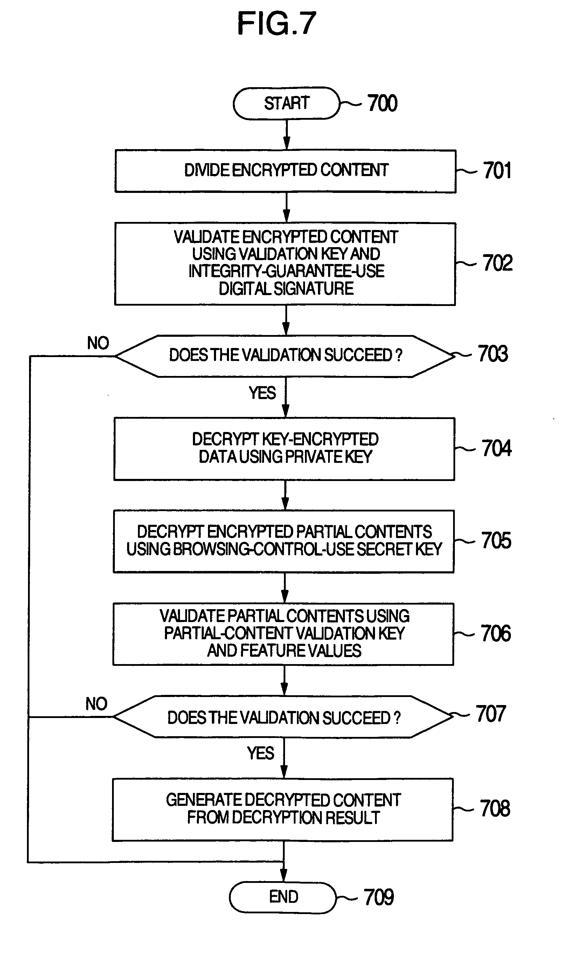

Next, Fig. 7 illustrates an overview of the decryption of the encrypted content 121 performed by the decryption processing unit (i.e., within the step 306) of the content utilization apparatus. The decryption processing unit receives the private key and the encrypted content 121 as the inputs, and outputs either the decrypted content or a decryption failure as the decryption result.
700: START
701: The decryption processing unit divides the encrypted content 121.
702: The unit validates the encrypted content 121, using the validation key and the integrity-guarantee-use digital signature.
703: If the validation is found to succeed, the unit proceeds to a step 704. Meanwhile, if the validation is found to fail, the unit outputs a decryption failure, and proceeds to a step 709.
704: The unit decrypts the key-encrypted data, using the private key.
705: The unit decrypts the encrypted partial contents, using the browsing-control-use secret key.
706: The unit validates the partial contents, using the partial-content validation key and the feature values.
707: If the validation is found to succeed, the unit proceeds to a step 708. Meanwhile, if the validation is found to fail, the unit outputs a decryption failure, and proceeds to the step 709.
708: The unit generates the decrypted content from the decryption result.
709 END

The details of the respective steps will be explained below. Additionally, the private key to be used for the decryption will be represented as sk[i] below.

As illustrated in Fig. 4 and Fig. 5, the encrypted content 121 includes the access-control information AC 502, the key-encrypted data e[1], ..., e[u] 503, the encrypted partial contents c[1], ..., c[n] 504, the partial-content validation key v[1], ..., v[n] 507, the feature values s[1], ..., s[n] 505, the digital signature σ 510, and the validation key 512. Accordingly, at the step 701, the decryption processing unit divides the given encrypted content 121 into the above-described access-control information AC 502, key-encrypted data e[1], ..., e[u] 503, encrypted partial contents c[1], ..., c[n] 504, partial-content validation key v[1], ..., v[n] 507, feature values s[1], ..., s[n] 505, digital signature σ 510, and validation key 512.

Next, at the step 702, the decryption processing unit couples, to each other, the partial-content validation key v[1], ..., v[n] 507, the access-control information AC 502, the key-encrypted data e[1], ..., e[u] 503, and the validation key 512. Then, the unit validates the coupled data based on the digital signature, using the digital signature σ 510 and the validation key 512 obtained as a result of the step 701.

If, at the step 702, the validation is found to fail, the unit outputs the decryption failure, and proceeds to the step 709. Otherwise, the unit proceeds to the next step 704 (step 703). Here, the unit decrypts the key-encrypted data e[i] 503, using the private key sk[i] (step 704).

Next, the unit acquires the browsing-control-use secret key k[i] 508 from the result obtained at the step 704. Then, the unit decrypts the encrypted partial contents c[i] 504, using the browsing-control-use secret key k[i] 508 (step 705).

Next, the unit validates the decrypted partial contents obtained as a result of the step 704, using the partial-content validation key v[i] 507 and the feature values s[i] 505 (step 707).

If, at the step 707, the validation is found to fail, the partial contents m[i] 500 have been falsified illegally. Consequently, the unit outputs the decryption failure, then terminating the processing (step 709). Otherwise, the unit generates the decrypted content 708 from the decryption result (step 708), then terminating the processing (step 709).

Incidentally, in the above-described decryption processing, it is desirable to output the decryption failure and to terminate the processing, if some troubles occur at the time of decryption. Examples of these troubles are as follows:
The decryption failure is output at the time of decryption of the key-encrypted data e[i] 503 using the private key pk[j] at the step 704, or at the time of decryption of the encrypted partial contents c[i] 504 at the step 705; or
at the time of decryption of the encrypted partial contents c[i] 504 at the step 705, the encrypted partial content c[i] 504 which is browsing-prohibited by the access-control information ac[i] is decryptable.

Although, in the above explanation, the case where the single private key is given as the input has been described, a plurality of private keys may also be input. In this case, the above-described processing is repeated with respect to the private keys given as the input. Also, when performing the decryption processing using the plurality of private keys, if there exist one or more private keys which results in the decryption failures, it is preferable to output the decryption failures and to stop the processing, or if there occur the decryption failures whose number is larger than the predetermined number with respect decryption failures using the private keys, it is preferable to output the decryption failures and to stop the processing.

Also, as described in the explanation of the encryption processing unit 226, the feature values s[i] 505 for the partial contents m[i] 500 may also be generated with respect to the encrypted partial contents c[i] 504. In this case, at the step 706, the partial contents is validated for the encrypted partial contents c[i] 504. Also, in this case, the encrypted partial content for which the browsing-control-use secret key k[i] 508 could not be obtained may also be validated using the partial-content validation key and the feature value similarly, or may also be validated prior to the processing at the step 704 instead of the step 706.

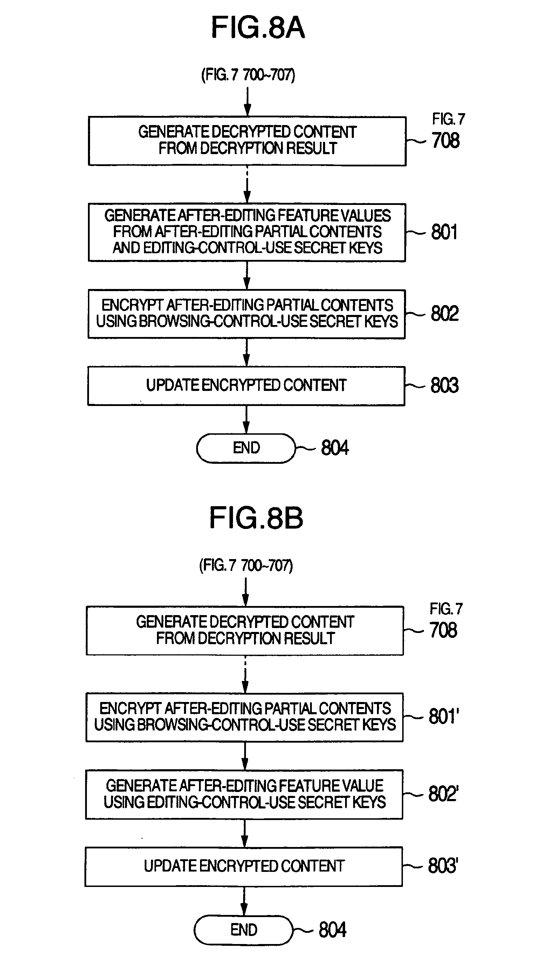

Fig. 8A illustrates an overview of steps for updating the encrypted content 121 performed by the update processing unit of the content utilization apparatus. In addition to the input of the decryption processing unit, the update processing unit accepts the encrypted content 121, editing-location position information i, and after-editing partial content m'[i] as the inputs, and outputs after-editing encrypted content.

Also, the following explanation will be given assuming that, prior to the update processing, the decryption processing (Fig. 7) described earlier has been terminated without being subjected to the decryption failure.
801: The update processing unit generates an after-editing feature value from the after-editing partial content and the editing-control-use secret key.
802: The unit encrypts the after-editing partial content, using the browsing-control-use secret key.
803: The unit updates the encrypted content.
804: END

The details of the respective steps will be explained below.

First, the update processing unit generates the after-editing feature value s'[i] for the after-editing partial content m'[i], using the editing-control-use secret key x[i] 506 obtained at the step 704 (step 801). Next, the unit encrypts the after-editing partial content m'[i] using the browsing-control-use secret key k[i] 508, thereby generating the after-editing encrypted partial content c'[i] (step 802). Finally, the unit updates the encrypted content by exchanging the original encrypted partial content c[i] 504 and feature value s[i] 505 with the obtained after-editing encrypted partial content c'[i] and after-editing feature value s'[i] respectively (step 803).

The above-described processing has been explained assuming that the feature values s[i] 505 are generated for the partial contents m[i] 500 using the editing-control-use secret key. If the feature values s[i] 505 are generated for the encrypted partial contents c[i] 504, the processing is similar to the above.

Incidentally, the above-described processing has been explained regarding the case where a partial content m[i] 500 is edited. The update processing, however, may also be performed for the one or more partial contents m[i] 500 simultaneously or continuously.

Also, when updating the after-editing encrypted content once again, the update processing is performed for the after-editing encrypted content regarding it as the encrypted content 121.

In the above-described processing, it is desirable to output an update failure and to stop the processing, if the partial content m[i] 500 specified by the input editing-location position information is the partial content whose editing is prohibited by the access-control information ac[i], or if the editing-control-use secret key corresponding to the editing-location position information is not obtained at the step 704.

The above-described description has been explained assuming that, prior to the update processing, the decryption processing (Fig. 7) described earlier has been terminated without being subjected to the decryption failure. In the decryption processing, however, all its steps need not necessarily be executed. For example, the update processing may also be executed without performing the decryption of the key-encrypted data e[i] 503 (step 704) and the processing after the step 705 using the obtained editing-control-use secret key.

Also, for example, when a plurality of encrypted contents 121 resulting from updating one and the same encrypted content 121 are received from the one and more content utilization apparatuses, a processing of putting together the plurality of encrypted contents edited into a single content may be performed by performing the above-described update processing step 803.

Additionally, in this case, it is desirable to determine rules for the update processing in advance, and to execute the update processing in accordance with these update rules. Examples of these update rules are as follows:
It is confirmed that each after-editing partial content of the encrypted content updated results from updating different areas;
If there exist after-editing partial contents which result from updating one and the same area, the after-editing partial content having the newest editing time-and-date is selected;
The after-editing encrypted content of a user whose predetermined order of priority among users is the highest is utilized for the update processing; or the like.

If the two encrypted contents 121, i.e., the before-update and after-editing encrypted contents 121, are available, in order to judge which of the contents is the newest, it is preferable to generate time stamps of the editing time-and-date (or, creation time-and-date) on the encrypted contents 121 or the partial contents. Additionally, taking advantage of the time stamps based on the digital signature technology is desirable from the point-of-view of security.

In the above-described decryption processing, the encrypted partial content c[i] 504 within the encrypted content 121 is encrypted using the browsing-control-use secret key k[i] 508. The browsing-control-use secret key k[i] 508 is encrypted using the public key sk[j] 511. The public key used in encrypting the browsing-control-use secret key k[i] 508 is only the public key pk[j] 511 for w[i] of the browsing-permitted state in the access-control information ac[j] that stores the access condition on the partial content. On account of this, if the encrypted partial contents c[i] 504 are decrypted using the private key sk[j] corresponding to the public key pk[j] 511, the encrypted partial contents c[i] 504 are decryptable. Even if, however, the encrypted partial contents c[i] 504 are decrypted using the private key corresponding to any public key other than that, the browsing-control-use secret key k[i] 508 cannot be obtained, and thus it is difficult to obtain the information on the original partial content m[i] 500. Consequently, it becomes possible to permit the browsing by a user who possesses the private key sk[j] corresponding to the public key pk[j] 511.

Also, similarly, in the update processing unit, the editing-control-use secret key x[i] 506 of the encrypted partial content c[i] 504 within the encrypted content 121 is included only in the key-encrypted data e[j] 503 which is encrypted using the public key pk[j] 511 for w[i] of the editing-permitted state in the access-control information ac[j] that stores the access condition on the partial content. Without the editing-control-use secret key x[i] 506, from the property of the digital signature, it is computationally difficult to generate the authentic feature value s[i] 505 (which makes the validation using the partial-content validation key v[i] 507 successful) for the partial content m[i] 500. Consequently, it is possible to give the authorization of the editing permission to the user who possesses the private key sk[j] corresponding to the public key pk[j] 511.

Fig. 9 illustrates an overview of the data structure of the encrypted content 121 output by the encryption processing unit 226. As illustrated in Fig. 5, the encrypted content 121 includes the access-control information AC 502, the key-encrypted data e[1], ..., e[u] 503, the encrypted partial contents c[1], ..., c[n] 504, the partial-content validation key v[1], ..., v[n] 507, the feature values s[1], ..., s[n] 505, the digital signature σ 510, and the validation key 512.

As illustrated in Fig. 9, the encrypted content 121 includes an encrypted partial data field 904 including the encrypted partial contents, an editing-control-use data field 903 including the feature values and the partial-content validation keys, and an encrypted-data-use header field 901 including the key-encrypted data, the access-control information, content partition information, the digital signature, and the validation key. Incidentally, as illustrated in Fig. 9, the editing-control-use data field 903 and the encrypted partial data field 904 as a whole will be referred to as "encrypted content data field 902".

It is preferable to implement the data representation illustrated in Fig. 9, using data formats such as XML and ASN. 1. The concrete data format using XML will be given as an example below.

Fig. 10 illustrates an example of the data representation method in the case where the encrypted content 121 illustrated in Fig. 9 is represented using XML.

As illustrated in Fig. 9, the encrypted content 121 includes the encrypted-data-use header field 901 and the encrypted content data field 902. In the example in Fig. 10, in accordance with the data structure illustrated in Fig. 9, the encrypted-data-use header field 901 is configured by CED_Param element, Signature Value element, VerifyingKey element, and AccessControlList element. Also, the encrypted content data field 902 is configured by EncryptedDataReferenceList element.

CED_Param element configuring the encrypted-data-use header field 901 includes KeyEncryptionAlgorithm element for specifying an algorithm in the asymmetric-key cryptography used for generating the key-encrypted data, DataEncryptionAlgorithm element for specifying an algorithm in the symmetric-key cryptography used for encrypting the partial contents, and SignatureAlgorithm element for specifying an algorithm in the digital signature used for generating the integrity-guarantee-use digital signature and the feature values. Also, SignatureValue element and VerifyingKey element in the encrypted-data-use header field 901 are elements for storing the integrity-guarantee-use digital signature and the validation key for performing the validation using the integrity-guarantee-use digital signature. Also, AccessControlList element, which is an element for storing the key-encrypted data and the access-control information, includes EncryptionKeyData element for storing the key-encrypted data, DecrytableDataReference element for specifying browsable partial contents, EditableDataReference element for specifying editable partial contents, and ReferenceList element for putting together these elements. Moreover, the information concerning a single public key necessary to decrypt the encrypted content is stored by putting together AccessControlList element and EncryptionKey element using ReferenceList element.

Here, Algorithm attribute of each element is used for describing an identifier for an algorithm to be used. For example, in the case of using AES-128 with CBC mode for the encryption of partial content, http://www.w3.org/2001/04/xmlenc#aes128-cbc or the like is described in Algorithm attribute of DataEncryptionAlgorithm element.

The information for specifying a private key to be used for the decryption is described in Key_id attribute of EncryptionKey element. For example, identification numbers unique to the private keys may be issued by the key management apparatus 101, then being described in Key_id attribute. Also, reference information for specifying EncryptedDataReference element (equivalent to the encrypted partial content) which is made browsable by the browsing-control-use secret key obtained as a result of decrypting EncryptionKeyData element, and reference information for specifying EncryptedDataReference element which is made editable by the editing-control-use secret key obtained as a result of decrypting EncryptionKeyData element are described in URI attribute of DecrytableDataReference element, and URI attribute of EditableDataReference element, respectively.

Incidentally, in addition to the above-described information, a variety of information which becomes necessary at the time of encryption and decryption may also be described in CED_Param element. For example, file information (i.e., meta information such as file format and file encoding method) on a file to be a target may also be described therein.

Next, EncryptedDataReferenceList element configuring the encrypted content data field 902 includes EncryptedDataReference element. EncryptedDataReference element includes ReferenceList element for storing the reference information on the partial contents, EncryptedData element for storing the encrypted partial contents, SignatureValue element for storing the feature values, and VerifyingKey element for storing the partial-content validation key.

EncryptedDataReference element is an element for describing the content partition information. Also, an Xpath expression for specifying data (i.e., element of XML in the case of XML) to be an encryption target is described in Xpath element which is a child element of ReferenceList element. Additionally, if the data to be an encryption target is data other than the XML data, Xpath element 713 may be modified appropriately (e.g., in the case of image, coordinate information or the like), thereby specifying the data to be an encryption target.

EncryptedData element is an element for storing the result acquired by encrypting the data obtained from Xpath element. Additionally, the encrypted data may also be stored not by using EncryptedData element, but by replacing the encrypted data in the area where the original partial content existed.

In order to specify EncryptedDataReference element from AccessibleDataReference element within EncryptedKey element, an identifier for specifying EncryptedDataReference element uniquely is stored in data_id attribute of EncryptedDataReference element. Also, information for indicating whether or not its partial contents have been decrypted is stored in is_encrypted attribute of EncryptedDataReference element. In addition thereto, whether or not its partial contents have been edited may also be indicated by adding is_edited attribute to EncryptedDataReference element.

Incidentally, it is preferable that, in the above description, with respect to the elements (e.g., SignatureValue element and EncryptedKeyData element) in which the binary data needs to be recorded, such as the key-encrypted data e[1], ..., e[u] 503, the encrypted partial contents c[1], ..., c[n] 504, the partial-content validation key v[1], ..., v[n] 507, the feature values s[1], ..., s[n] 505, the digital signature σ 510, and the validation key 512, a value obtained by converting given binary data into a character string using Base64 code is stored in the corresponding element.

In the processing by the encryption PG 222 and the decryption PG (Fig. 4 and Fig. 7), the information such as the content partition information and the encrypted contents has been represented using the arrangements. In accordance with the correspondence relationship between these arrangement representations and the XML representation illustrated in Fig. 10, the XML representation illustrated in Fig. 10 can easily be modified into the arrangement representations by assigning index numbers in an ascending order just like 0, 1, ... from the element described from above in the format illustrated in Fig. 10.

Incidentally, Fig. 10 illustrates an example of the data representation method for representing the encrypted content 121. Accordingly, arbitrary names may be used as the element names and the like. Also, the data representation method may be implemented not by using XML, but by using another data format such as ASN. 1.

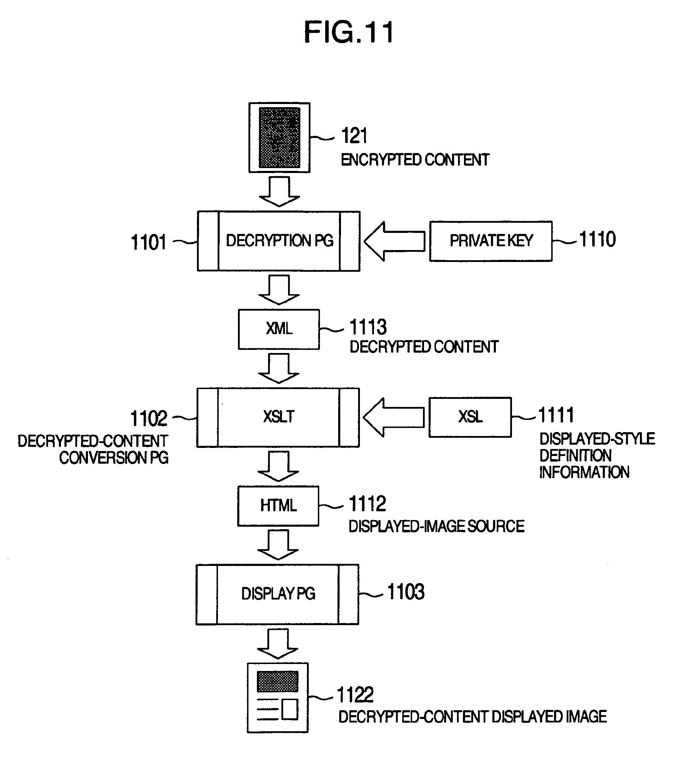

Fig. 11 illustrates an overview of processing performed by a decrypted-content display PG for generating the decrypted-content displayed image 1122 from the encrypted content 121 in the case where the encrypted content 121 is configured using XML as illustrated in Fig. 10.

The decryption PG 1101 performs the processing illustrated in Fig. 7, thereby generating the decrypted content 1113 from the encrypted content 121. Moreover, the decrypted content 1113 generated is converted into a displayed-image source 1112 by a decrypted-content conversion PG 1102. Furthermore, the displayed-image source 1112 is output to the output device 204 such as a display by the decrypted-content display PG 1103. Additionally, when displaying the decrypted content 1113 on the Web browser using XML, the decrypted content 1113 and the displayed-image source 1112 are represented using XML and HTML (Hyper Text Markup Language) as illustrated in Fig. 11. Also, the decrypted-content conversion PG 1102 and the decrypted-content display PG 1103 correspond to the XSLT (XSL Transform, where XSL is the abbreviation for Extensible Stylesheet Language)-use program and the Web browser, respectively. Incidentally, it is general that, when the decrypted-content conversion PG 1102 is XSLT, XSL is used as displayed-style definition information 1111 which describes the conversion rule.

Additionally, although, Fig. 11 has illustrated the case where the encrypted content 121 is represented using XML as illustrated in Fig. 10, which may be modified. For example, if the decrypted content 1113 is OpenXML, ODF, or another application-specific file format, these file formats may be used as the encrypted content 121 and the decrypted content 1113 illustrated in Fig. 11. Also, the decrypted-content conversion PG 1102 and the displayed-style definition information 1111 may be made unnecessary by outputting the generated decrypted content 1113 in the above-described file formats when the decryption PG 1101 generates the decrypted content 1113. In this case, the displayed image 1122 of the generated decrypted content 1113 may also be obtained by taking advantage of the application programs for displaying the file formats as the decrypted-content display PG 1103.

Incidentally, when displaying the displayed image 1122 using the decrypted-content display PG 1103, in editing the contents or the like, the displayed image may be displayed in the editable state in advance by identifying the location corresponding to the editable partial contents using the private key 1110 used for the decryption based on the access-control information AC. Alternatively, the displayed image may be displayed by providing an editing-use area independently of the displayed image 122. At the time of editing, the input of the after-editing partial contents may be received from the user input, using the input device 203 such as keyboard. Then, the encrypted content 121 may be updated using the editing processing unit described earlier.

In the present embodiment, the content is encrypted using the public key which is generated such that the correspondence is established between the public key and the authorization in advance. Furthermore, each user decrypts and edits the encrypted content, using the private key which is distributed in accordance with the authorization of each user.

In this configuration, the simplest method for assigning the keys to the users is as follows: In the key management apparatus 101, the public keys 210 and the private keys are issued on each authorization basis. Moreover, the private keys 1110 are stored in IC cards, then being distributed to the users having the respective authorizations. Simultaneously, the public keys 210 are publicized using a Web server or the like. In this case, if there occurs a change in the authorization of a user, it is desirable to execute the decryption PG 1101 under an authorization appropriate for the user by issuing an IC card newly to distribute the new IC card to the user, or by collecting the IC card from the user. However, the key management may also be executed as described below.

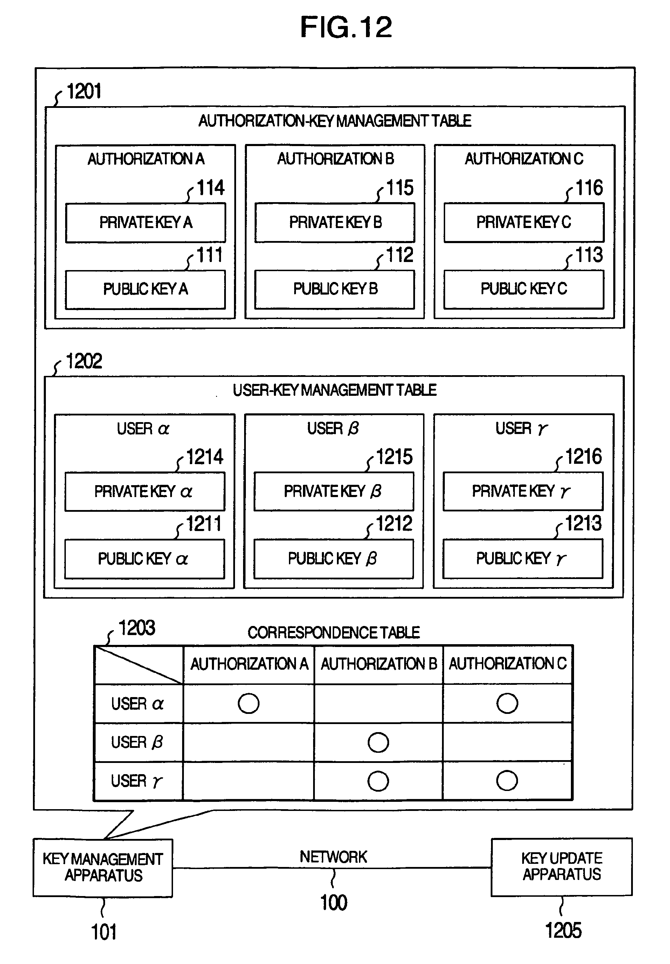

Fig. 12 illustrates an example of overview of the key management method in the key management apparatus 101. In the above-described simplest key management method, the private keys are generated on each authorization basis. Moreover, the respective private keys are stored in tamper-resistant-property-having storage devices such as the IC cards, then being distributed to the users. In this simplest method, however, the issuance and collection of the IC cards need to be performed on each authorization basis. In view of this situation, the key management as illustrated in Fig. 12 makes it possible to reduce a time-and-labor needed for the issuance and collection of the IC cards. An overview of the key management method illustrated in Fig. 12 will be explained below.

As illustrated in Fig. 12, the present key management method includes the key management apparatus 101 and a key update apparatus 1205. These apparatuses are connected to each other via the network 100. Also, as illustrated in Fig. 12, in the present key management method, the key management apparatus 101 stores therein an authorization-key management table 1201, a user-key management table 1202, and a correspondence table 1203 for establishing the correspondence between the user keys and the authorization keys, in order to manage the authorizations with the users. For example, using a database, these tables are stored in the external storage device 209 of the key management apparatus 101.

Incidentally, similarly to the content protection apparatus, the content utilization apparatuses, and the key management apparatus 101, the key update apparatus 1205 can be implemented using the electronic computer which has the general configuration illustrated in Fig. 2. Also, the external storage device 209 of the key update apparatus 1205 stores therein a key-update PG, a reception PG, and the encrypted secret keys. Additionally, similarly to the content protection apparatus 102, the CPU 207 executes the key-update PG and the reception PG, thereby embodying a key-update processing unit and a reception processing unit.

As described earlier, it is desirable from the point-of-view of security to prevent the information on the private keys in the key management apparatus 101 from being directly browsed from the network 100. On account of this, in the present key management method, it is desirable that, taking advantage of firewall or the like, the key update apparatus 1205 be set up on a network different from the network on which the content protection apparatus and the content utilization apparatuses are set up.

As illustrated in Fig. 12, in the key management apparatus 101, the private key A 114 and the public key A 111, the private key B 115 and the public key B 112, and the private key C 116 and the public key C 113 are generated with respect to an authorization A, an authorization B, and an authorization C, respectively. Also, a private key α 1214 and a public key α 1211, a private key β 1215 and a public key β 1212, and a private key γ 1216 and a public key γ 1213 are generated with respect to a user α, a user β, and a user γ, respectively.

When distributing the keys, the private key of each user is stored in advance in the tamper-resistant-property-having storage device such as the IC card, then being distributed to each user (the following explanation will be given assuming that the private key is stored in the IC card).

Next, when distributing the keys corresponding to the authorizations to each user, the processing to be performed is as follows: For example, as illustrated in Fig. 12, when assigning the authorization A and the authorization C to the user α, the corresponding private key A 114 and the private key C 116 are encrypted using the public key α 1211 of the user α, then being transmitted to the key update apparatus 1205 via the network 100.

In the key update apparatus 1205, the private key A 114 and private key C 116 encrypted are decrypted using the private key α 1214 within the IC card, thereby decrypting the private key A 114 and private key C 116 within the IC card. At this time, it is desirable from the point-of-view of security that the decryption using the private key α 1214 be performed within the IC card.

Also, when distributing, to each user, the private key assigned to the authorization, it is desirable to perform authentication of each user, such as the authentication using the personal key of each user within the IC card.

Incidentally, in the above explanation, the public keys in the asymmetric-key cryptography have been used as the user keys. The secret keys in the symmetric-key cryptography, however, may also be used as the user keys, if it is determined that the user keys are used in a manner of being limited only to the communications between the key management apparatus 101 and the IC card possessed by each user. In this case, the encryption in the key management apparatus 101 and the decryption of the authorization keys within the IC card are performed using the secret keys in the symmetric-key cryptography.

The distribution of the private key to each user via the network as described above makes it possible to reduce the time-and-labor needed for the direct sending and collection of the IC card, i.e., the physical medium. Also, it is preferable to merely issue a piece of IC card specific to each user, and thus, if there occurs a change in the authorization, to merely rewrite the authorization key within the IC card. This makes it possible to reduce the time-and-labor needed for the reissuance and collection of the IC card.

Additionally, in Fig. 12, the case where the number of the authorizations and that of the users are three respectively has been illustrated as an example of the key management method. The number of the authorizations and that of the users, however, change depending on the number of the authorizations and that of the users managed in the key management apparatus 101. Namely, the key management method illustrated in Fig. 12 is merely an example for realizing the encryption method in the present embodiment. Consequently, a key management method different therefrom may also be used.

Also, in the above-described embodiment, the asymmetric-key cryptography is employed, and the public key and the private key are used for the encryption and the decryption respectively. Not being limited to a mode like this, however, the secret key in the symmetric-key cryptography may also be used for the encryption and the decryption. For example, when performing the decryption using the secret key in the symmetric-key cryptography, it is also desirable from the point-of-view of security that, similarly to the case where the asymmetric-key cryptography is employed, the secret key be directly and surely distributed to each user, and that the secret key be unable to be easily replicated, by distributing, to each user who utilizes the content utilization apparatus, the secret key stored in the tamper-resistant-property-having storage device such as the IC card. Also, when employing the symmetric-key cryptography, the secret key need not necessarily be stored in the external storage device 209 of the content utilization apparatus at the time of decryption, for example by generating the secret key in the symmetric-key cryptography from the password.

Furthermore, when implementing the first embodiment using the symmetric-key cryptography, the same secret key is used not only in the content utilization apparatus which performs the decryption, but also in the content protection apparatus 102 which performs the encryption. On account of this, in order to prevent the secret key from leaking out unnecessarily, it is desirable that, when the content protection apparatus 102 acquires the secret key from the key management apparatus 101, the content protection apparatus 102 takes advantage of encryption communications, and prevents the secret key from being disclosed unnecessarily to the user who performs the encryption by access control.

Also, the above-described modified example has been explained regarding the case where the secret key is stored in the IC card. Not being limited to the IC card, however, the secret key may also be stored in the external storage device 209 of the content utilization apparatus. Also, for example, instead of storing the secret key in the content utilization apparatus, the secret key may also be distributed at the time of execution of the decryption processing (Fig. 7). In this case, it is desirable from the point-of-view of security that the content utilization apparatus and the key management apparatus 101 carry out the following:
Taking advantage of encryption communications or the like, the communications with the content protection apparatus 102 and with the content utilization apparatus are protected;
After the encryption processing in the content protection apparatus 102 and after the decryption processing in the content utilization apparatus, the obtained public key and private key are deleted;
The access control is performed depending on each user who performs the encryption or the decryption; and the like.

Additionally, as described in the present embodiment, the employment of the asymmetric-key cryptography makes it possible for a user who performs the encryption of the content to perform the encryption of the content using the public key, i.e., the public information. Consequently, there exists an advantage that there is no necessity for secretly sharing the information in advance between the user who performs the encryption and a user who performs the decryption.

### [Embodiment 2]

The first embodiment which is a method for controlling an editing location has been explained regarding the case where the feature values for the partial contents is generated taking advantage of the general digital signature technology. A second embodiment will be explained below regarding the case where the feature values for the partial contents is generated taking advantage of the digital signature technology which is referred to as "Aggregate Signature".

The fundamental system configuration of the second embodiment is the same as that of the first embodiment. Consequently, different points from the first embodiment will be explained as the main topics below.

Aggregate Signature is the digital signature technology which makes it possible to aggregate digital signatures which are generated by a plurality of signers for the respective contents into a single digital signature. Taking advantage of Aggregate Signature makes it possible to aggregate the feature values s[1], ..., s[n] for the partial contents into a single feature value s. The details of Aggregate Signature are explained in the following reference:
Don Boneh, Craig Centry, Ben Lynn, Hovev Shacham, "Aggregated Signature and Verifiably Encrypted Signatures from Bilinear Maps", Advances in Cryptology-EUROCRYPTO 2003, LNCS. 2655, Springer Verlag.
Incidentally, Aggregate Signature is the digital signature technology which makes it possible to aggregate a plurality of digital signatures into a single digital signature. In Aggregate Signature, however, nothing is described regarding the method for permitting a certain specific user to edit a part of the content (i.e., method for controlling the editing location).

First, before describing the details of the second embodiment, Aggregate Signature itself will be explained below.

Aggregate Signature includes four processes, i.e., the key generation, the signature generation, Aggregation, and the signature validation. Each of the above-described processes will be explained below. Incidentally, G1, G2, and GT denote cyclic groups of prime order p. Also, g1 and g2 denote generators of G1 and G2. Phi denotes a calculable isomorphism map from G1 to G2, where phi (g1) = g2. Also, E denotes a calculable and non-degenerated bilinear map from G1×G2 to GT. As examples of groups and bilinear maps which satisfy these properties, there have been known the group generated by rational points on an elliptic curve, and maps referred to as Weil paring and Tate paring defined there.

First, the key generation will be explained below. The respective signers u[i] generate random numbers x[i] which range from 0 to p-1, then calculating v[i] =gl^x[i]. Here, "a^b" denotes the b-th power of a. Here, x[i] are the signing keys, and v[i] are the validation keys.

Next, the signature generation will be explained below. When generating the digital signatures for contents M[i], h[i] = H(M[i]) are calculated. Here, H denotes a hash function for receiving an input of arbitrary length, and outputting an element of G2. Next, σ[i] = h[i]^x[i] are calculated, then defining σ[i] as the digital signatures for the contents M[i].

When aggregating the digital signatures σ[1], ..., σ[n], Σ = σ[1] × ... × σ[n] is calculated.

When performing the signature validation of the contents M[1], ..., M[n], it is confirmed that E(g1,Σ) = E(v[1], h[1]) × ... × E(v[n], h[n]) is established for the (Aggregated) digital signature Σ. Here, h[i] = H(M[i]) holds.

When Aggregate Signature is used, each processing of the encryption processing (Fig. 4, Fig. 5, and Fig. 6), the decryption processing (Fig. 7), and the update processing (Fig. 8A), which are described in the first embodiment, will be modified as described below.

First, in the encryption processing, the editing-control-use secret keys and the partial-content validation keys generated at the step 402 become equivalent to the signing keys and the validation keys generated by the above-described key generation in Aggregate Signature. Namely, the editing-control-use secret keys x[i] 506 are the random numbers which range from 0 to p-1, and the partial-content validation keys v[i] 507 is represented by v[i] = gl^x[i].

Also, the generation of the feature values s[i] 505 for the partial contents m[i] 500 at the step 404 becomes equivalent to the generation of the digital signatures using the editing-control-use secret keys x[i] 506 (i.e., the secret keys in Aggregate Signature). Namely, the feature values s[i] are generated by calculating h[i] = H(c[i]), and further calculating s[i] = h[i]^x[i]. Here, attention should be paid to the fact that h[i] is generated not for the partial contents m[i] 500, but for the encrypted partial contents c[i] 504. The reason for this is as follows: If the feature values s[i] 505 is generated for the partial contents m[i] 500, the partial contents m[i] 500, or the hash values h[i] for the partial contents m[i] 500 become necessary when validating the Aggregated feature value s described below (The details will be described later. Additionally, when performing no browsing control, the feature values are generated not for the encrypted partial contents c[i] 504, but for the partial contents m[i] 500).

As described earlier, taking advantage of the Aggregation processing based on Aggregate Signature makes it possible to replace the feature values s[1], ..., s[n] by the single feature value s (= s[1] × ... × s[n]). Incidentally, it is preferable to perform the Aggregation processing at an arbitrary position after the step 404, such as immediately after the step 404, or at the time of the generation of the encrypted content at the step 407.

Incidentally, if the feature values s[i] 505 are generated for the partial contents m[i] 500, and then are aggregated into the single feature value s, at the time of the validation processing of the partial contents m[i] 500 in the decryption processing at the step 706, all of the partial contents m[i] 500, or all of the hash values h[i] become necessary for the validation processing based on Aggregate Signature. The partial contents m[i] 500 cannot be obtained except for the partial content whose browsing is permitted by the private key sk[j] used for the decryption at the time of decryption processing. As a result, the execution of the decryption processing requires that the hash values h[i] be stored in advance in the encrypted content 121 for all of the partial contents m[i] 500. Namely, in substitution for the feature values s[i] 505, the hash values h[i] needs to be stored in advance in the encrypted content 121 for each partial content m[i] 500, which eliminates the advantage that the feature values s[i] 505 are aggregated into the single feature value s by taking advantage of Aggregate Signature.

As described above, even if the feature values s[i] 505 are generated for the partial contents m[i] 500, Aggregate Signature may also be taken advantage of, as long as the hash values h[i] have been stored in advance in the encrypted content 121. Also, the encryption, decryption, and update processing in accordance with the same configuration method as the first embodiment may also be implemented by taking advantage of Aggregate Signature without using the Aggregation processing.

Also, by using the signing key and the validation key in Aggregate Signature as the signing key and the validation key 512 at the step 406, the Aggregation processing with respect to the integrity-guarantee-use digital signature σ 510 and the Aggregated feature value s may be performed.

Next, the decryption processing will be explained. The steps in the decryption processing are the same as those described in the first embodiment. However, the validation of the partial contents based on the partial-content validation key v[i] 507 and the feature values s[i] 505 at the step 706 becomes the validation processing based on Aggregate Signature. Namely, it is confirmed that e(g1,s) = E(v[1], h[1]) × ... × E(v[n], h[n]) is established for the single feature value s (= s[1] × ... × s[n]) generated by Aggregation. Here, h[i] = H(c[i]) holds.

Additionally, as described in the encryption processing, when the signing key and the validation key 512 at the step 406 are replaced by the signing key and the validation key in Aggregate Signature, the processing at the step 707 can be performed in a batch at the step 703.

Next, the steps in the update processing in the case where Aggregate Signature is used will be explained. Fig. 8B illustrates an outline of the update processing of the encrypted content in the second embodiment.

In the case where Aggregate Signature is used, the feature values s[i] 505 are aggregated into the single feature value s in the entire encrypted content 121. On account of this, the update processing will be modified as described below (the modified processing will be denoted by 801', 802', or 803'). Incidentally, similarly to the first embodiment, in addition to the input of the decryption processing unit, the update processing unit accepts the encrypted content 121, the editing-location position information i, and the after-editing partial content m'[i] as the inputs, and outputs the after-editing encrypted content.

First, at the step 801', the unit encrypts the after-editing partial content m'[i] using the browsing-control-use secret key k[i] 508, thereby generating the after-editing encrypted partial content c'[i]. Next, at the step 802', the unit generates the after-editing feature value s'[i] for the after-editing encrypted partial content c'[i], using the editing-control-use secret key x[i] 506 (i.e., the signing key in Aggregate Signature).

At the step 803', the unit updates the encrypted content as described below.

First, the unit exchanges the original encrypted partial content c[i] 504 with the obtained after-editing encrypted partial content c'[i]. Next, the unit calculates the feature value s[i] 505 (= h[i]^x[i]) for the original encrypted partial content c[i] 504, using the editing-control-use secret key x[i] 506. Incidentally, h[i] = H(c[i]) holds. Moreover, the unit calculates the after-editing feature value s' = s × s'[i]/s[i] with respect to the aggregate feature value s, then exchanging the aggregate feature value s with the after-editing feature value s'. In this way, the unit updates the encrypted content (the step 803'up to here), then terminating the processing (step 804).

As described earlier, since the aggregate feature value s = s[1] × ... × s[n], a feature value s" which eliminates the feature value s[i] 505 from the aggregate feature value s can be obtained by calculating s/s[i]. Furthermore, the feature value s' obtained by calculating s"× s'[i] becomes the feature value s' for the updated partial content m'[i] in substitution for s[i] 505.

As described above, taking advantage of Aggregate Signature allows the feature values s[i] 505 to be aggregated into the single feature value s. Here, the feature values s[i] 505 have been stored in the encrypted content 121 on each partial-content basis. For example, in this case of the XML-used format illustrated in Fig. 9, SignatureValue element becomes unnecessary, which is the element for storing the feature values s[i] 505, and which is the child element of EncryptedDataReference element within EncryptedDataReferenceList element. Instead, since the feature values become the single aggregate feature value for the encrypted content 121, it is preferable to set up SignatureValue element not as the child element of EncryptedDataReference element but as the child element of EncryptedDataReferenceList element, and to store the aggregate feature value s in the SignatureValue element. Also, by using the signing key and the validation key in Aggregate Signature as the signing key and the validation key 512 at the step 406, when aggregating the feature values s and the integrity-guarantee-use digital signature σ 510 into the single aggregated value, the above-described SignatureValue element, which is the child element of EncryptedDataReferenceList element, also becomes unnecessary. Accordingly, it is preferable to store the single aggregated value of the feature values s and the integrity-guarantee-use digital signature σ 510 in SignatureValue element which is the child element of CED_Param element.

Incidentally, the second embodiment has been explained regarding the method for controlling the editing location and the browsing location by assigning the browsing-control-use secret key and the editing-control-use secret key to the partial contents. As explained in the first embodiment, however, browsing the partial contents need not necessarily be controlled. In this case, as explained in the first embodiment, the generation of the browsing-control-use secret key is unnecessary. Accordingly, it is preferable that the calculation of the feature values for the partial contents be performed for the partial contents themselves.

### [Embodiment 3]

A third embodiment will be explained below regarding a method which takes advantage of the Chameleon hash function similarly to Giuseppe Ateniese et al.

The fundamental system configuration of the third embodiment is the same as that of the first embodiment. Consequently, different points from the first embodiment will be explained as the main topics below.

In general, a hash function which is secure from the cryptographic point-of-view possesses, as its properties, the one-wayness (i.e., when an output is given, it is difficult to calculate an input corresponding thereto), and the collision resistance (i.e., it is difficult to find out a set of different inputs which output one and the same hash value). As described earlier, the Chameleon hash function is a hash function which, only when secret information is given, makes it possible to easily generate the different inputs (i.e., the second preimage) which possess one and the same hash value as a hash value obtained for a certain input.

Before explaining the present embodiment, a Chameleon hash function disclosed in the following reference will be explained below. Incidentally, the Chameleon hash function based on the discrete logarithm problem disclosed in the following reference will be used. The method which will be described in the third embodiment, however, can also be implemented even in the case of Chameleon hash functions other than the Chameleon hash function disclosed in the following reference. Additionally, the Chameleon hash function based on the discrete logarithm problem disclosed in the following reference will be referred to as "Chameleon hash function" simply below.

Hugo Krawczyk and Tal Rabin, "Chameleon Signatures", Network and Distributed System Security Symposium (NDSS2000),
http://www.isoc.org/isoc/conference/ndss/2000/proceedings/042.pdf.

The Chameleon hash includes three processes, i.e., set-up, hash, and update. The details of each process will be explained below.

First, in the set-up process, prime numbers p and q, which satisfy p = a×q + 1, are generated. Here, a number a is an arbitrary integer, and a sufficiently large prime number is selected as q from the point-of-view of security. A number x is selected at random from 1 to q, then calculating v = g^x mod p. Here, g denotes a generation element g of order q of a multiplication group Zp based on the prime number p, and the expression a = b mod c indicates that a remainder resulting from dividing b by c is equal to a. It is assumed that x is secret information, v is public information, and p, q, and g are common information.

Next, in the hash process, h = (g^M × v^R) mod p are calculated using contents M, random numbers R, and the public information, then h being the hash values. Incidentally, it is preferable to generate the random numbers R at random at the first time of the hash-value calculation. If the data size of the contents M is large, the above-described h may also be calculated by taking advantage of the result obtained using the hash function H. Although what is referred to as "hash function" here may be a generally-known arbitrary hash function such as SHA-1, it is desirable to use the hash function which is secure from the cryptographic point-of-view (i.e., the hash function which possesses the properties of the one-wayness and the collision resistance).

In the update process, after-editing random numbers R' which satisfy M + x × R = M' + x × R' mod q are output, where the secret information is x, the contents are M, the random numbers are R, and after-editing contents are M'. Here, the result obtained by applying the hash to the after-editing contents M' and the after-editing random numbers R' becomes equal to the result obtained by applying the hash to the contents M and the random numbers R.

When the Chameleon hash function is used, the encryption processing (Fig. 4, Fig. 5, and Fig. 6), the decryption processing (Fig. 7), and the update processing (Fig. 8A) which are described in the first embodiment, will be modified as described below.

First, in the encryption processing at the step 402, the set-up process of the Chameleon hash function is executed, thereby generating the common information p, q, and g. Next, as the secret information and the public information, the editing-control-use secret keys x[i] 506 and the partial-content validation keys v[i] 507 are generated using the set-up process of the Chameleon hash function, and then are assigned to each partial-content. Namely, the editing-control-use secret keys x[i] 506 become equivalent to the integers x[i] from 1 to q, and the partial-content validation keys v[i] 507 become equivalent to v[i] = (g^x[i]) mod p. Additionally, the common information p, q, and g in the Chameleon hash function may be generated independently on each partial-content basis at the step 402, or determined in advance as information common to the system, then being used.

Also, the generation of the feature values s[i] 505 for the partial contents m[i] 500 at the step 404 is modified to the generation of the hash values based on the hash process using the editing-control-use secret keys x[i] 506 (i.e., the secret information in the Chameleon hash function). Namely, the random numbers R[i] are generated, and then the feature values s[i] = (g^m[i] × v[i]^R[i]) mod p are calculated. Here, when generating the feature values s[i] 505, if the data size of the partial contents m[i] 500 is large, the result obtained applying the hash function H to the partial contents m[i] 500 may be used. Also, the feature values s[i] 505 may be generated for the encrypted partial contents c[i] 504 instead of the partial contents m[i] 500.

In the generation of the integrity-guarantee-use digital signature σ 510 at the step 406, using the signing key generated at the present step, the integrity-guarantee-use digital signature σ 510 is generated for the data which is generated by coupling, to each other, the feature values s[1], ..., s[n] 505 for the partial contents m[i] 500 and the coupled signature target data which is generated by coupling, to each other, the partial-content validation key v[i] 507, the access-control information ac[i] 502, the key-encrypted data e[1], ..., e[u] 503 and the validation key 512 generated at the present step. Here, attention should be paid to the fact that, when the Chameleon hash function is used, in addition to the signature target data in the first embodiment, the feature values s[1], ..., s[n] 505 are also coupled. The reason for this is as described below. In the first and second embodiments where the digital signature technology is used, it is difficult to calculate the authentic feature values s[i] 505 (i.e., the validation processing of the partial contents m[i] 500 in the decryption processing (step 706) succeeds), unless the corresponding editing-control-use secret key x[i] 506 (i.e., the signing key in the digital signature technology) is known, while, in the case of the Chameleon hash function, it is possible to calculate the feature values s[i] 505 (i.e., the hash values h in the Chameleon hash function) from the partial-content validation key v[i] 507 (i.e., the public information in the Chameleon hash function). Incidentally, in the present embodiment where the Chameleon hash function is used, the editing location is controlled by taking advantage of the following property of the Chameleon hash function: "only when the secret information (i.e., the editing-control-use secret key x[i] 506) is given, it is easy to calculate a plurality of different inputs which generate one and the same hash value". The details will be described later.

Finally, at the step 407, encrypted content 121 is generated by coupling, to each other, the access-control information AC 502, the key-encrypted data e[1], ..., e[u] 503, the encrypted partial contents c[1], ..., c[n] 504, the partial-content validation key v[1], ..., v[n] 507, the feature values s[1], ..., s[n] 505, the random numbers R[1], ..., R[n], the digital signature σ 510, and the validation key 512. Incidentally, in the third embodiment where the Chameleon hash function is used, unlike the first embodiment, the random numbers R[1], ..., R[n] are included in the encrypted content 121.

Next, the decryption processing will be explained. The steps in the decryption processing are the same as those described in the first embodiment. However, at the step 702, the encrypted content is validated with respect to the partial-content validation key v[1], ..., v[n] 507, the access-control information AC 502, the key-encrypted data e[1], ..., e[u] 503, the feature values s[1], ..., s[n] 505, and the validation key 512. Also, in the validation of the partial contents at the step 706, it is validated using the hash processing of Chameleon hash function whether or not the feature values s[i] 505 and the hash values h[i] for the partial contents m[i] 500 coincide with each other.

Next, the steps in the update processing in the case where the Chameleon hash function is used will be explained. Fig. 8C illustrates an outline of the update processing of the encrypted content in the third embodiment.

In the case where the Chameleon hash function is used, the update processing will be modified as described below (the modified processing will be referred to as 801", 802", or 803"). Incidentally, similarly to the first embodiment, in addition to the input of the decryption processing unit, the update processing unit accepts the encrypted content 121, the editing-location position information i, and the after-editing partial contents m'[i] as the inputs, and outputs the after-editing encrypted content.

First, at the step 801 ", the after-editing random numbers R' [i] are generated by the update processing of the Chameleon hash function for the after-editing partial contents m'[i], using the editing-control-use secret key x[i] 506. Next, at the step 802", the unit encrypts the after-editing partial contents m'[i] using the browsing-control-use secret key k[i] 508, thereby generating the after-editing encrypted partial contents c'[i].

Finally, at the step 803 ", the unit updates the encrypted content by exchanging the original encrypted partial contents c[i] 504 and the random numbers R[i] with the obtained after-editing encrypted partial contents c'[i] and after-editing random numbers R'[i] (the step 803 "up to here), then terminating the processing (step 804).

In the above-described update processing, the update processing of the Chameleon hash function does not change the feature values s[i] 505 for the partial contents m[i] 500. This results from taking advantage of the property of the Chameleon hash function, i.e., "only when the secret information (i.e., the editing-control-use secret key x[i] 506) is given, it is easy to calculate a plurality of different inputs which generate one and the same hash value". Also, the integrity-guarantee-use digital signature σ 510 makes it difficult to falsify the feature values s[i] 505 for the partial contents m[i] 500. Moreover, the editing-control-use secret key x[i] 506 is included in the key-encrypted data e[j] 503 which is encrypted using the public key pk[j] 511 with respect to which the corresponding partial content m[i] 500 is set to be editing-permitted by the access-control information AC 502, and the editing-control-use secret key x[i] 506 is not included in the other key-encrypted data e[j] 503. These make it possible to control editing the partial content m[i].

As explained above, in the third embodiment which takes advantage of the Chameleon hash function, the data structure illustrated in Fig. 9 may also be employed as in the first embodiment. Also, for example, the XML-used format illustrated in Fig. 10 may also be employed as in the first embodiment. Incidentally, although, in the case where the Chameleon hash function is used, the random numbers R[1], ..., R[n] are included in the encrypted content 121, it is preferable to store the random numbers R[i] by adding RandomValue element within EncryptedDataReference element and the like.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A content protection apparatus (102), performing:
a processing (401) of dividing content (120) into a plurality of partial contents (500);
a processing (402) of generating an editing-control-use secret key (506) and a partial-content validation key (507) for each of the partial contents (500);
a processing (404) of generating a feature value (505) for each of the partial contents (500);
a processing (405) of assigning the one or more editable partial contents to each authorization using access-control information (502) and generating first key-encrypted data (503) by encrypting data obtained by coupling the editing-control-use secret keys (506) to each other, using a public key(511) in the asymmetric-key cryptography assigned to each authorization, the editing-control-use secret keys (506) being generated for the one or more editable partial contents assigned to each authorization;
a processing (406) of generating an integrity-guarantee-use digital signature (510) for the content (120); and
a processing (407) of generating first encrypted content (121) which includes the content (120), the access-control information (502), the partial-content validation keys (507), the feature values (505), and the first key-encrypted data (503).

2. The content protection apparatus (102) according to claim 1, further performing:
a processing (402) of generating a secret key in the symmetric-key cryptography as a browsing-control-use secret key (508) for each of the partial contents (500);
a processing (403) of generating encrypted partial contents (504) by encrypting the corresponding partial contents (500) using the browsing-control-use secret keys (508) generated;
a processing (405) of assigning the one or more browsable partial contents to each authorization using access-control information (502), and further coupling the browsing-control-use secret keys (508) to the data obtained by coupling the editing-control-use secret keys (506) to each other, and generating second key-encrypted data (503) by encrypting data obtained by the further coupling, using the public key (511), the browsing-control-use secret keys (508) being generated for the one or more browsable partial contents assigned to each authorization; and
a processing (407) of generating second encrypted content (121) which includes the encrypted partial contents (504), the partial-content validation keys (507), the feature values (505), and the second key-encrypted data (503).

3. The content protection apparatus (102) according to claim 1, wherein
the editing-control-use secret key (506) and the partial-content validation key (507) are a pair of a signing key and a validation key (512) in the digital signature technology;
the feature value (505) for each of the partial contents (500) is a digital signature value which is generated from each of the partial contents (500) using the signing key;
the integrity-guarantee-use digital signature (510) is a digital signature value which is generated from the data obtained by coupling the access-control information (502), the partial-content validation keys (507), and the first key-encrypted data (503) to each other, using the signing key in the digital signature technology.

4. The content protection apparatus (102) according to claim 3, wherein
the feature value (505) generated for each of the partial-content (500) is an element of a finite group; and
the processing of generating the feature value (505) for each of the partial contents (500) includes a processing of aggregating the feature values (505) into a single value by multiplying the feature values (505) generated for each of the partial-content (500) by each other.

5. The content protection apparatus (102) according to claim 1, wherein
the editing-control-use secret key (506) and the partial-content validation key (507) are a pair of a private key and a public key generated by the set-up processing of a Chameleon hash function;
the feature value (505) for each of the partial contents (500) is a hash value based on the Chameleon hash function;
the integrity-guarantee-use digital signature (510) is a digital signature value which is generated for the data obtained by coupling the access-control information (502), the partial-content validation keys (507), the first key-encrypted data (503), and the feature values (505) to each other, using a signing key out of a pair of the signing key and a validation key (512) in the digital signature technology; and
the first encrypted content (121) includes the content (120), the access-control information (502), the partial-content validation keys (507), the feature values (505), the first key-encrypted data (503), and a random number which is assigned to each of the partial contents (500).

6. A content utilization apparatus (103, 104, or 105) for browsing the first encrypted content (121) according to claim 1, performing:
a processing (702) of validating the first encrypted content (121) using the integrity-guarantee-use digital signature (510); and
a processing (706) of validating each of the partial contents (500) using the partial-content validation key (507).

7. A content utilization apparatus (103, 104, or 105) for browsing the second encrypted content (121) according to claim 2, performing:
a processing (702) of validating the second encrypted content (121) using the integrity-guarantee-use digital signature (510);
a processing (706) of validating each of the partial contents (500) using the partial-content validation key (507);
a processing (704) of decrypting the encrypted second key-encrypted data (503) using one or more private keys which are assigned to each authorization; and
a processing (705, 708) of decrypting the encrypted partial contents (504) using the browsing-control-use secret keys (508) obtained from the decryption result, and generating decrypted content from the decrypted partial contents.

8. A content utilization apparatus (103, 104, or 105) for browsing the first encrypted content (121) according to claim 6, wherein
the processing (702) of validating the first encrypted content (121) using the integrity-guarantee-use digital signature (510) includes a processing of validating the data obtained by coupling the access-control information (502), the partial-content validation keys (507), and the first key-encrypted data (503), using a validation key (512) and the integrity-guarantee-use digital signature (510) in the digital signature technology included in the first encrypted content (121); and
the processing (706) of validating each of the partial contents (500) using the partial-content validation key (507) includes a processing of validating each of the partial contents (500) using the partial-content validation key (507) and the feature value (505), taking advantage of the validation processing in the digital signature technology.

9. A content utilization apparatus (103, 104, or 105) for browsing the first encrypted content (121) according to claim 6, wherein
the processing (702) of validating the first encrypted content (121) using the integrity-guarantee-use digital signature (510) includes a processing (706) of validating the data obtained by coupling the access-control information (502), the partial-content validation keys (507), the first key-encrypted data (503), and the feature values (505), using a validation key (512) and the integrity-guarantee-use digital signature (510) in the digital signature technology included in the first encrypted content (121); and
the processing of validating each of the partial contents (500) using the partial-content validation key (507) includes a processing of generating a hash value for each of the partial contents (500) based on the Chameleon hash function using the partial-content validation key (507), and validating as to whether or not the hash value coincides with the feature value (505).

10. A content utilization apparatus (103, 104, or 105) for editing the first encrypted content (121) according to claim 6, wherein the apparatus performs:
a processing (801) of generating after-editing feature values using after-editing partial contents and the editing-control-use secret keys (506); and
a processing (803) of updating the first encrypted content (121) by exchanging the original encrypted partial contents (500) and feature values (505) specified by editing-location specifying information with the after-editing partial contents and the after-editing feature values respectively.

11. A content utilization apparatus (103, 104, or 105) for editing the first encrypted content (121) according to claim 6, wherein the apparatus performs:
a processing (802') of generating after-editing feature values from after-editing partial contents using the editing-control-use secret keys (506); and
a processing (803') of updating the first encrypted content (121) by exchanging the original encrypted partial contents (500) specified by editing-location specifying information and an aggregate feature values with the after-editing partial contents and the after-editing aggregate feature value respectively, the after-editing aggregate feature value being generated by multiplying the aggregate feature value by inverse elements of the feature values (505) for the original partial contents and further by multiplying the multiplied aggregate feature value by the feature values of the after-editing partial contents.

12. A content utilization apparatus (103, 104, or 105) for editing the first encrypted content (121) according to claim 6, wherein the apparatus performs:
a processing (801") of generating after-editing random numbers from the partial contents (500) specified by editing-position specifying information, random numbers assigned to the partial contents (500), after-editing partial contents, and the editing-control-use secret keys (506), taking advantage of an update processing of the Chameleon hash function; and
a processing (803") of updating the first encrypted content (121) by exchanging the original encrypted partial contents (500) and random numbers specified by the editing-position specifying information with the after-editing partial contents and the after-editing random numbers respectively.
